# EUROPEAN PATENT SPECIFICATION

(11) **EP 3 922 953 B1**
(45) Date of publication and mention of the grant of the patent: **15.05.2024**
(21) Application number: 20213951.5
(22) Date of filing: 14.12.2020
(51) Int. Cl.: G01D 5/20

(54) **INDUCTIVE ANGULAR SENSOR ARRANGEMENT, SYSTEM AND MOTOR ASSEMBLY**
INDUKTIVE WINKELSENSORANORDNUNG, SYSTEM UND MOTORANORDNUNG
AGENCEMENT, SYSTÈME ET ENSEMBLE MOTEUR DE CAPTEUR ANGULAIRE INDUCTIF

(43) Date of publication of application: 15.12.2021
(73) Proprietor: Melexis Technologies SA, 2022 Bevaix (CH)
(72) Inventor: KLEINER, Bernhard, 01109 Dresden (DE); LUGANI, Lorenzo, 2022 Bevaix (CH); KLUGE, Wolfram, 01109 Dresden (DE); IHLE, David, 01109 Dresden (DE)
(74) Representative: Jacobs, Lambert

(56) References cited:
- WO-A1-98/49519
- WO-A1-2019/226879
- US-A1- 2014 117 980
- US-A1- 2020 064 158

## Description

### Field of the invention

The present invention relates in general to the field of inductive angular position sensors, and to a system and a motor comprising such an angular position sensor.

### Background of the invention

Various inductive angle sensors are known in the art, for example for motor control purposes. They typically comprise an excitation coil (also known as "transmitter coil") and multiple detection coils (also known as "receiver coils"). The transmitter coil and the receiving coils are inductively coupled to one another. The amount of coupling may be influenced by a coupling element (also known as "target") movably mounted in the vicinity of the transmitter and receiver coils. The excitation coil may for example be excited with an AC signal, which induces eddy currents in the target. The receiving coils will generate signals caused by the eddy currents in the target and the current in the transmitting coil. The signals from the receiving coils are analysed in an electronic circuit, and an angular position can be determined based on these signals in known manners.

Different kinds of inductive angle sensors exist. The shape and size of the coils may vary, as well as the shape and size of the target. They may have different characteristics such as angular range (e.g. 360°, 180°, 120°, etc.), accuracy or measurement error, robustness against axial or radial position offset, compactness, maximum outer radius (also referred to as "turning radius"), component count, cost or component cost, etc.

WO2019226879(A1) describes, and FIG. 1 shows an inductive position sensor assembly comprising: a printed circuit board comprising a plurality of coils, and a shaft having a first surface at a first distance from the printed circuit board, and a second surface at a second distance from the printed circuit board. The proximal flat surface has a semi-circular shape, and functions as a target.

There is always room for improvements or alternatives.

US 2014/117980 A1 discloses various inductive position sensors for sensing the position of a target relative to sensor coils. The target magnetically couples with first and second coils so that signals are generated that depend on the relative position of the target and the first and second coils. The target is arranged so that substantially all of the target overlaps with loops of the first coil and so that when a first end of the target is adjacent a first loop of the first coil, a second end of the target is adjacent a second loop of the first coil that has an opposite winding direction to that of the first loop. The second coil is arranged relative to the target such that the magnetic coupling between the second coil and the first end of the target is opposite to the magnetic coupling between the second coil and the second end of the target.

WO 2019/226879 A1 discloses another inductive sensor assembly comprising a shaft and a multilayered printed circuit board (PCB). The shaft includes a first end having a bottom surface. A target including a flat forming a straight edge is integrally formed into the first end of the shaft. The PCB includes a transmitter coil and a two part receiving coil, in which a first receiving coil is on a different layer of the PCB than the second receiving coil in an axial direction. The target is rotated about a central axis of the two part receiving coil. The straight edge of the target and the bottom surface is detected by the two part receiving coil.

### Summary of the invention

It is an object of embodiments of the present invention to provide an inductive angular sensor arrangement having a substrate comprising a plurality of coils, and a target which is movable relative to said substrate.

It is an object of embodiments of the present invention to provide an angular position sensor system comprising such a sensor assembly.

It is also an object of embodiments of the present invention to provide a motor assembly comprising such a sensor assembly.

It is an object of embodiments of the present invention to provide an inductive angular sensor arrangement, system and assembly wherein the target is substantially planar.

It is an object of embodiments of the present invention to provide an inductive angular sensor arrangement and system having an angular measurement range of 360°.

It is an object of embodiments of the present invention to provide an inductive angular sensor arrangement and system, with larger mounting tolerances as compared to similar arrangements having substantially the same overall size, wherein an additional error (also referred to herein as "drift error") is reduced, or is as small as possible.

It is an object of embodiments of the present invention to provide an inductive angular sensor arrangement and system which allows for larger tolerances of the target position (with respect to its nominal position), without significantly increasing its overall size, and with an additional error (referred to herein as "drift error") which is reduced, or is as small as possible.

It is an object of embodiments of the present invention to provide an inductive angular sensor arrangement and system, which, for given dimensions of the sensor arrangement, offers an improved accuracy, e.g. a reduced sensitivity to positioning errors.

It is an object of embodiments of the present invention to provide an inductive angular sensor arrangement and system, which for a given maximum outer radius (or for a given "turning radius") provides an improved accuracy, e.g. a reduced sensitivity to positioning errors.

It is an object of embodiments of the present invention to provide an inductive angular sensor arrangement and system, which provides an improved accuracy, e.g. a reduced sensitivity to positioning errors, for a given cost, in particular for a given cost of the target PCB.

It is an object of embodiments of the present invention to provide an inductive angular sensor arrangement and system, which is easier to produce, hence at a lower cost, without negatively influencing the accuracy.

These and other objects are accomplished by a current sensor according to embodiments of the present invention.

According to a first aspect, the present invention provides an inductive angular sensor arrangement comprising a substrate (or first substrate) comprising at least one transmitter coil and at least two receiver coils, the at least one transmitter coil having a substantially circular or annular shape with a first radius and a first centre. An orthogonal projection of the at least two receiver coils on the substrate is located completely within an orthogonal projection of the at least one transmitter coil. The substrate defines a first axis perpendicular to the substrate and passing through the first centre. The inductive angular sensor arrangement further comprises a target comprising a substantially planar electrical conductive portion rotatably arranged at a predefined distance from and substantially parallel to the substrate. The target is rotatably arranged relative to the substrate, i.e. rotatable about a second axis which is substantially co-axially aligned with the first axis within mounting tolerances.

The electrical conductive portion of the target has a convex shape with an outer periphery, the outer periphery having an orthogonal projection along the first axis onto the substrate, said projection having a portion that is situated outside of the transmitter coil, and at least one of the following options:
(i) the electrically conductive portion of the target has a convex shape with an outer periphery defined by a first curve being a circular arc having a second radius larger than the first radius, and a second curve having a curvature smaller than that of the first curve; or
(ii) the electrical conductive portion of the target has a convex shape with an outer periphery having an overall rectangular shape, having a width in the range of 125% to 275% of the first radius and a length in the range of 250% to 750% of the first radius, with two rounded corners or with two chamfered corners or with four right corners; or
(iii) the electrical conductive portion of the target has an overall rectangular shape, having a width in the range of 125% to 275% of the first radius and a length in the range of 250% to 750% of the first radius, wherein one long side of the overall rectangular shape is replaced by a circular arc having a radius of at least 5 times the first radius; or
(iv) the electrical conductive portion of the target has an overall rectangular shape, having a width in the range of 125% to 275% of the first radius and a length in the range of 250% to 750% of the first radius, with two rounded corners or with two chamfered corners or with two right corners, and wherein one long side of the overall rectangular shape is replaced by an arc having a radius of 5 to 20 times the first radius.

The electrical conductor portion allows eddy currents to flow. The curvature of a circle is defined as the reciprocal of the radius of that circle. The second curve (or arc) may be a circular arc, or an arc of an ellipse, or an arc of a parabola or the like. The second curve need not have a constant curvature, although it may.

It is an advantage of each of these arrangements that they provide a reduced linearity error as compared to a similar inductive sensor arrangement having substantially the same size and the same relative position between the target and the substrate, but wherein the target has a shape with an outer periphery defined by a straight edge and a half circle, referred to herein as a "D-shape target".

Or stated in other words, it is an advantage of these arrangements that they allow a larger variation of the target position relative to the substrate comprising the coils, for a given (maximum allowed) angular error.

Depending on the specific implementation of the target (e.g. a rectangular PCB, or a PCB with chamfered corners), the target may furthermore be easier/cheaper to produce (than a D-shaped target)., and hence cheaper to produce.

In an embodiment, the first circular arc spans an angle of at least 150°, or at least 160°, or at least 165°, for example equal to about 170°, as seen from the rotation axis of the target.

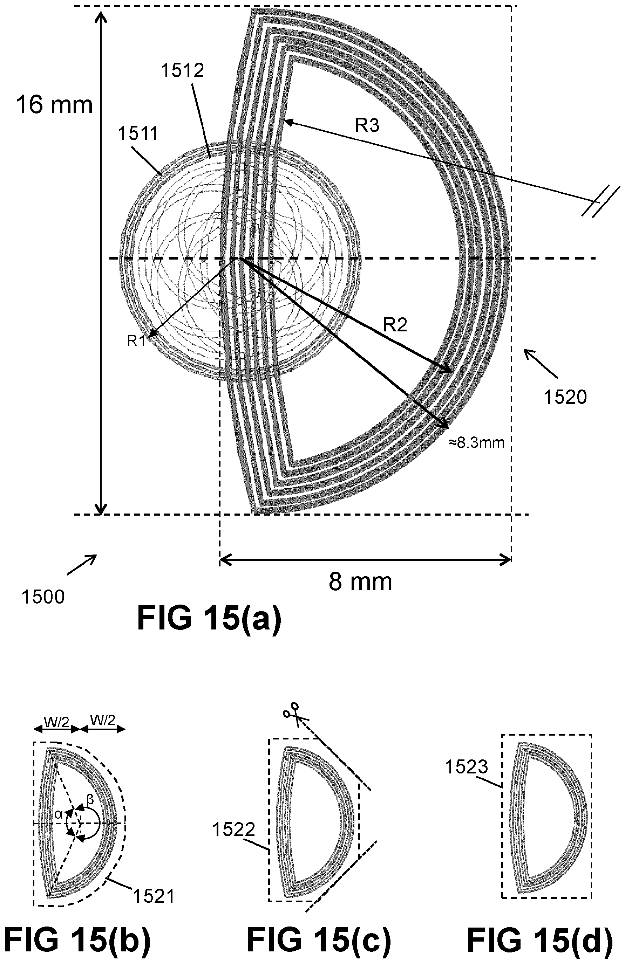

In an embodiment, the first circular arc spans an angle of at least 160°, or at least 170°, or at least 180°, or at least 190°, or at least 200°, or at least 210° as seen from a center of the convex shape (e.g. as illustrated by the angle β in FIG. 15(b).

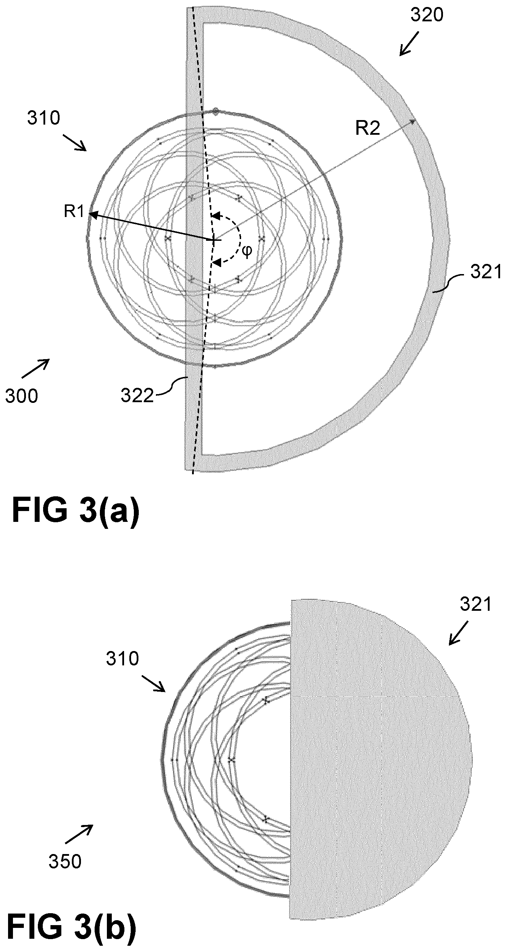

In an embodiment, the electrically conductive portion has a convex shape (i.e. has a shape with an outer periphery defined by said circular arc with said second radius, and by said curve or arc with said curvature (e.g. third radius), and the entire region inside the outer periphery is also conductive, for example in the form of a metal plate, e.g. as illustrated in FIG. 3(b).

In an embodiment, the electrically conductive portion has a concave shape (i.e. has a shape with an outer periphery defined by said second radius and said curvature (e.g. third radius), but at least a portion of the region inside the outer periphery is not conductive.

In an embodiment, an orthogonal projection of the at least two receiver coils on the substrate is located completely within an orthogonal projection of the at least one transmitter coil.

In an embodiment, each of the at least two receiver coils has a periodicity of 360°. This offers the advantage that the angular range of this position sensor is 360°. Such a sensor is sometimes also referred to as a "two-pole" inductive sensor.

In an embodiment, the first radius (R1) is a value in the range from 3.0 mm to 10.0 mm; and a ratio R2/R1 of the second radius (R2) and the first radius (R1) is a value in the range from 110% to 250%. Thus, the radius of the (first) circular arc portion of the target is larger than the radius of the at least one transmitter coil.

In an embodiment, each of the at least two receiver coils has a substantially circular shape. Preferably these receiver coils have a radius smaller than that of the transmitter coil.

In an embodiment, the substrate is a (first) printed circuit board (PCB); and the at least one transmitter coil and the at least two receiver coils are formed by conductive tracks on the printed circuit board.

In an embodiment, the (first) substrate containing the coils defines a first axis perpendicular to the substrate and passing through a center (Cs) of the at least one transmitter coil; and the target is rotatable about a second axis; and wherein the second axis is substantially co-axially aligned with the first axis within a first predefined tolerance margin; (or stated in other words: wherein the first and second axis are substantially parallel, and wherein a radial offset between the first and second axis is a value within a first tolerance margin); and wherein the target is located substantially at a predefined or nominal distance from the (first) substrate within a second predefined tolerance margin (or stated in other words: wherein the (first) substrate and the target are located at an axial distance, also referred to herein as "air gap", which is value within a second tolerance margin around an envisioned non-zero distance.

In an embodiment, the predefined tolerance margin of the radial position offset is a tolerance up to 0.4 mm, or up to 0.5 mm, or up to 0.6 mm, or up to 0.7 mm, or up to 0.8 mm.

In an embodiment, the predefined or nominal distance (Znom) or airgap is equal to about 1.2 mm or 1.3 mm in the Z-direction.

In an embodiment, the predefined tolerance margin of the axial position offset is a range of ±0.2 mm, or is a range of ±0.3 mm, or is a range of ±0.4 mm, or is a range of ±0.5 mm.

In an embodiment, the target has a symmetry axis passing through a center (Ct) of the first circular curve; and the second curve has a shape that deviates from a straight line (i.e. has a non-linear shape) oriented in a direction perpendicular to this symmetry axis by an amount that monotonically increases with distance from the symmetry axis, wherein the amount is chosen so as to substantially compensate an angular error that would occur if the second curve would be a straight line.

In an embodiment, the second curve is formed by a plurality of at least four or at least six or at least eight linear segments, which are slightly rotated relative to one another. This could be considered as a "piece-wise-linear" approximation of an arc portion, e.g. of a circular arc portion. Such embodiments may be easier to simulate and/or design and/or layout and/or produce.

In an embodiment, the second curve is a second substantially circular arc having a third radius larger than the second radius.

In an embodiment, the second curve is a second substantially circular arc having a third radius in the range of 5 to 20 times the first radius R1 of the transmitter coil.

In an embodiment, a ratio R3/R2 of the third radius R3 and the second radius R2 is a value in the range from 2 to 10, or from 3 to 7, or from 4.0 to 6.0, for example equal to about 3, or equal to about 4, or equal to about 5, or equal to about 6, or equal to about 7.

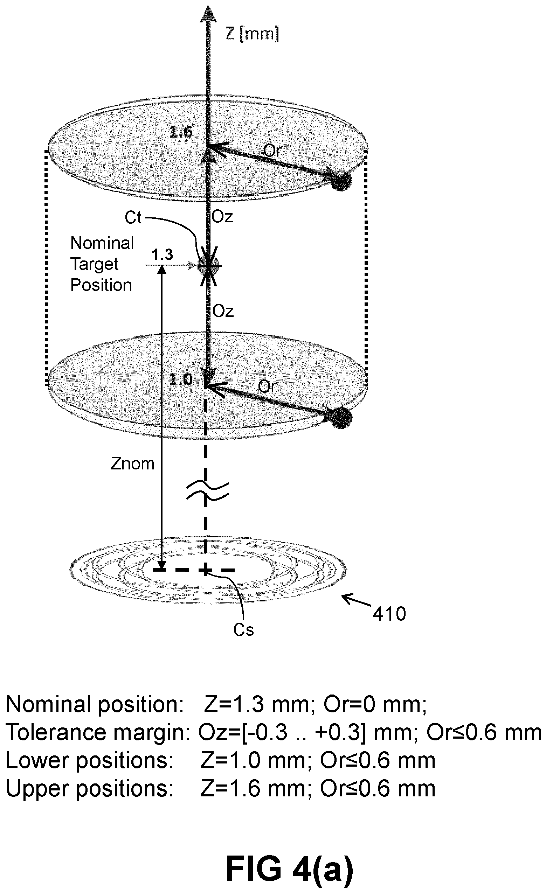

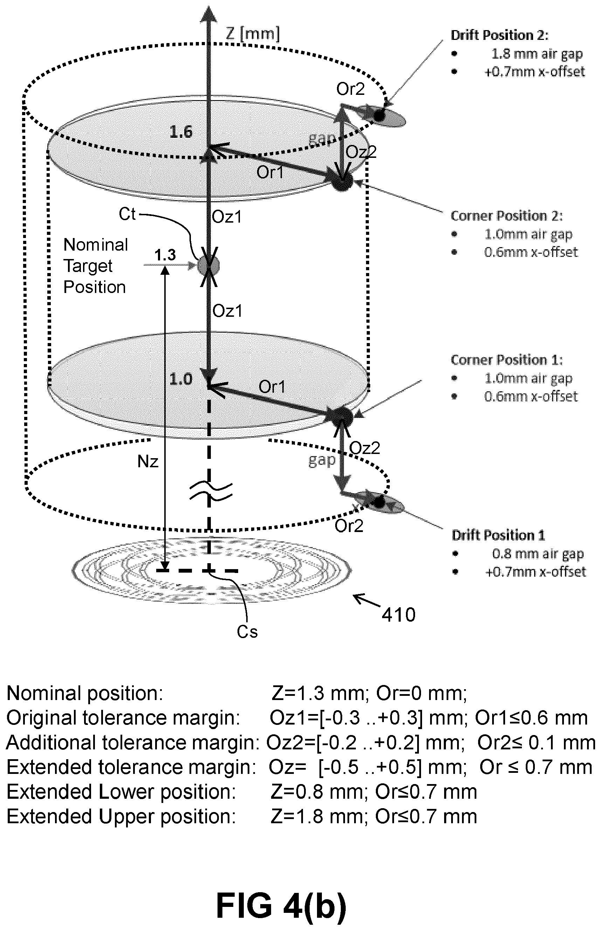

In an embodiment, the third radius is chosen so as to minimize the maximum error (also referred to as "worst-case error") between an actual angular position and a calculated angular position derived from the signals provided by the at least two receiver coils, when the target (or a reference point Ct thereof, defined as the center of the first circular arc portion) would be located in an actual position which is radially offset by an amount "Or" within the first tolerance margin and/or axially offset by an amount "Oz" within the second tolerance margin from its predefined position relative to the substrate, e.g. as illustrated in FIG. 4(a) or FIG. 4(b).

With "choosing the third radius such that the error is minimized" is meant that the value of the third radius is chosen for which the "worst case error" in any random position (radial offset, axial offset) near the predefined (nominal) position but within the predefined tolerance margins of the axial offset (e.g. within ±0.4 mm) and within the predefined tolerance margin of the radial offset (e.g. ≤0.6 mm), and for any angle about the second axis (in a 360° range) is minimized. The "optimum" value of this radius can be determined by performing computer-simulations, e.g. using the algorithm described in the description, or using any other algorithm known in the art. Using computer-simulations offers the advantage that it is not required to actually build and test a large number of physical targets.

In an embodiment, the target is a conductive metal plate.

In an embodiment, the metal plate may have a mainly or overall semi-circular shape, but having a curved edge portion rather than a straight edge portion.

In an embodiment, the metal plate may have a mainly or overall rectangular shape, optionally having two rounded or two chamfered corners.

The metal plate may have a mainly or overall semi-circular shape, but having a curved edge portion (also referred to herein as "bow") rather than a straight edge portion.

The metal plate may have an a central opening.

In an embodiment, the target comprises a second printed circuit board, and the electrically conduction portion is formed by at least one electrically conductive track on this second printed circuit board. This conductive track may form a coil having multiple windings, for example having at least two or at least three or at least four or at least five windings.

In an embodiment, the (second) printed circuit board has an overall rectangular shape having a width in the range of R1 * 125% to R1 * 275%, or in the range from R1*150% to R*250%, or in the range from R1*175% to R1*225%; and has a length in the range from R1*250% to R1*750%, or in the range from R1*275% to R1*700%, or in the range from R1*300% to R1*600%, or in the range from R1*350% to R1*500%, R1 being the radius of the transmitter coil.

In an embodiment, the (second) printed circuit board has an overall rectangular shape with two rounded corners, or with two chamfered corners, or with two truncated or removed corners, e.g. obtained by cutting, e.g. laser cutting or milling or stamping.

In an embodiment, the (second) printed circuit board has a rectangular shape with four right corners (i.e. with four corners forming an angle of 90°).

In an embodiment, the target further comprises a capacitor, operatively connected to the electrically conducting portion, e.g. to the at least one electrically conductive track, so as to form an LC circuit. The LC circuit of the target may have a target resonance frequency.

According to a second aspect, the present invention also provides an angular position sensor system, comprising: an inductive angular sensor arrangement according to the first aspect; and a semiconductor device operatively connected to the at least one transmitter coil, and configured for exciting the at least one transmitter coil with an alternating current; and operatively connected to the at least two receiver coils, and configured for receiving signals from the at least two receiver coils; and further configured for determining an angular position of the target relative to the substrate based on the received signals or configured for converting the signals received from the at least two receiver coils into quadrature signals.

The angular position can be determined in any known manner (e.g. using known algorithms).

In an embodiment, the received signals are converted into two periodic signals, e.g. two sinusoidal signals, which are substantially 90° phase shifted, and the angular position of the target is calculated based on these two sinusoidal signals.

In another embodiment, each of the at least two receiving coils forms a resonant circuit, and the position of the target is determined using any known resonant inductive position sensing algorithm.

According to a third aspect, the present invention also provides a motor assembly comprising: an electrical motor having a rotatable shaft and a housing; an inductive angular sensor arrangement according to the first aspect, or an angular position sensor system according to the second aspect; wherein the target is configured for rotating along with the rotatable shaft, and wherein the substrate comprising the at least one transmitter coil and the at least two receiver coils is stationary with respect to the housing.

According to another aspect, the present invention provides a kit of parts comprising: a first substrate comprising at least one transmitter coil and at least two receiver coils, the at least one transmitter coil having a substantially circular or annular shape with a first radius R1; a target comprising a second printed circuit board comprising an electrical conductive portion; wherein the electrical conductive portion has a convex shape with an outer periphery comprising a curve or an arc (or bow) having a curvature smaller than 1/(5*R1), or having a radius larger than (5*R1).

In an embodiment, this curve or arc (or bow) spans an angle of at least 120°, or at least 130°, or at least 140°, as seen from a center of the second printed circuit board.

In an embodiment, said curve or arc (or bow) is a circular arc, with a radius larger than 5*R1, and optionally smaller than 10*R1, R1 being the radius of the transmitter coil.

In an embodiment, said curve or arc (or bow), measured at the outer periphery of the conductive portion, spans an angle of at least 120°, or at least 130°, or at least 140°, as seen from the centre of the second printed circuit board. In the example of FIG. 15(b), the angle α is equal to about 134°. (it is noted that this definition does not refer to the mounting position or the rotation axis of the target PCB, but only to the target itself).

In an embodiment the second printed circuit board is a rectangular PCB with four right corners.

In an embodiment the second printed circuit board is an overall rectangular PCB with two truncated corners, e.g. with two chamfered corners or with two rounded corners.

In an embodiment the second printed circuit board has a shape resembling a half disk, for example as shown in FIG. 15(b).

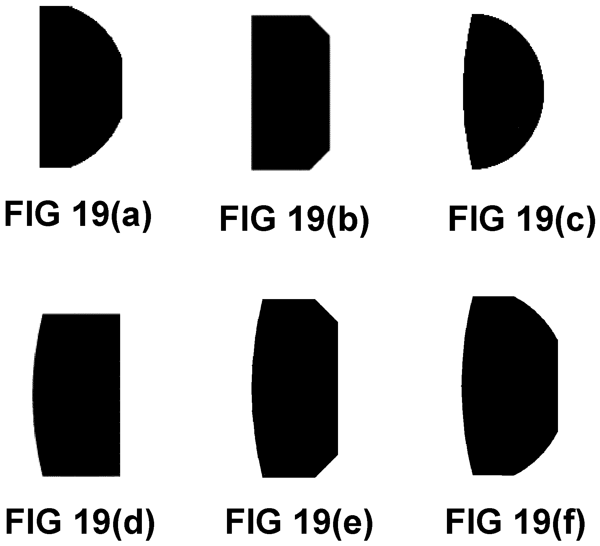

According to another aspect, the present invention is also directed to a metal target having a shape as shown in FIG. 19(a) to FIG. 19(f).

In an embodiment, this metal target is made of Cu or a Cu-alloy, or Al or an Al-alloy.

In an embodiment, a largest diameter or a largest diagonal or a largest chord of these shapes is a value in the range from 10 mm to 40 mm, or in the range from 15 mm to 30 mm.

Particular and preferred aspects of the invention are set out in the accompanying independent and dependent claims. Features from the dependent claims may be combined with features of the independent claims and with features of other dependent claims as appropriate and not merely as explicitly set out in the claims.

These and other aspects of the invention will be apparent from and elucidated with reference to the embodiment(s) described hereinafter.

### Brief description of the drawings

**FIG. 1** is a replica of FIG. 1(a) of WO2019226879(A1).
**FIG. 2(a)** shows a top view of a printed circuit board comprising a plurality of coils, as can be used in embodiments of the present invention.
**FIG. 2(b)** shows a top view of an exemplary target, considered as a "reference target" having a substantially semi-circular shape, and referred to herein as "D-shaped target". This figure also shows a first axis X and a second axis Y. The target is symmetrical with respect to the Y-axis, and is asymmetrical with respect to the X-axis.
**FIG. 2(c)** shows an exemplary assembly (in top view), considered as a "reference assembly", having a substrate as shown in FIG. 2(a) and having a target as shown in FIG. 2(b), which is perfectly positioned in a predefined (nominal) position relative to the substrate.
**FIG. 2(d)** illustrates an actual assembly wherein the target is radially offset from its nominal position in the Y-direction (i.e. along its symmetry axis).
**FIG. 2(e)** illustrates an actual assembly wherein the target is radially offset from its nominal position in the X-direction.
**FIG. 3(a)** shows a variant of the assembly of FIG. 2(c), wherein the target has a larger size.
**FIG. 3(b)** shows another variant of the assembly shown in FIG. 2(c), wherein the target has a semi-disc shape.
**FIG. 4(a)** is an abstract representation illustrating the nominal (or ideal) position of the "reference point Ct" of the target relative to the substrate containing the coils, and shows a virtual cylinder representing mounting positions which are axially and/or radially offset from the nominal position.
**FIG. 4(b)** is a variant of FIG. 4(a), illustrating a larger virtual cylinder, representing mounting positions with an increased offset (or with an additional offset) in the Z-direction and/or with an increased offset (or with an additional offset) in the radial-direction.
**FIG. 4(c)** shows two exemplary waveforms, one showing the so called "linearity error" for a target situated at Z=1.0 mm, and one for a target situated at Z=0.8 mm.
**FIG. 4(d)** shows the difference between the two waveforms of FIG. 4(c), representing the drift error due to an additional offset in the Z-direction from 1.0 mm to 0.8 mm.
**FIG. 4(e)** shows a table with the drift error due to an axial offset from 1.0 mm to 0.8 mm, at a radial offset (Ox) of up to 0.7 mm, and shows the drift error due to an axial offset from 1.6 mm to 1.8 mm, at a radial offset (Ox) of up to 0.7 mm, for an angular sensor arrangement comprising a substrate having a transmitter coil radius R1=3.9 mm, and a D-shaped target having a straight edge as shown in FIG. 2, and having a target radius R2=7.0 mm.
**FIG. 4(f)** shows a table with the drift error due to an axial offset from 1.0 mm to 0.8 mm, at a radial offset (Ox) of up to 0.7 mm, and shows the drift error due to an axial offset from 1.6 mm to 1.8 mm, at a radial offset (Ox) of up to 0.7 mm, for an angular sensor arrangement comprising a substrate having a transmitter coil radius R1=3.9 mm, and a D-shaped target having a straight edge as shown in FIG. 2, and having a target radius R2=8.0 mm.
**FIG. 5(a)** shows a substrate with at least one transmitter coil and at least two receiver coils, as can be used in embodiments of the present invention.
**FIG. 5(b)** shows a target having a curved edge (or "bow") instead of a straight edge, as can be used in embodiments of the present invention.
**FIG. 5(c) to FIG. 5(e)** show several examples of possible implementations of the conductive portion of the target, the present invention not being limited hereto.
**FIG. 6(a)** and **FIG. 6(b)** show "drift error waveforms" for an angular sensor arrangement according to embodiments of the present invention, having a "bow-shaped" target with a radius R2=7.0 mm.
**FIG. 6(c)** and **FIG. 6(d)** show "drift error waveforms" for an angular sensor arrangement according to embodiments of the present invention, having a "bow-shaped" target with a radius R2=8.0 mm.
**FIG. 7(a)** shows a table illustrating the drift error for an angular sensor arrangement comprising a "bow-shaped" target as proposed by the present invention, compared to that of a D-shaped target with a straight edge, for a target radius R2=7.0 mm.
**FIG. 7(b)** shows a comparison table like that of FIG. 7(a) for a target radius R2=8.0 mm.
**FIG. 8** is a block-diagram illustrating a motor assembly according to an embodiment of the present invention, comprising an angular sensor arrangement as described above, and an electrical motor.
**FIG. 9** is a block-diagram of an angular sensor system according to an embodiment of the present invention, comprising an angular sensor arrangement as described above, and an integrated circuit configured for exciting the transmitter coil and for reading out the receiver coils.
**FIG. 10(a)** and **FIG. 10(b)** illustrate a possible way to determine a close-to-optimal curve or an optimal curve for the target, (this drawing is strongly exaggerated for illustrative purposes).
**FIG. 11(a)** shows another inductive sensor arrangement according to an embodiment of the present invention, comprising a target with a conductive portion having a rectangular shape and two rounded corners.
**FIG. 11(b)** shows simulation results for this sensor arrangement.
**FIG. 12(a)** shows a particular example of a target, where the conductive portion has a rectangular shape with two rounded corners, as illustrated in FIG. 11(a), which can be implemented on a printed circuit board of (slightly more than) 16 mm x 8 mm.
**FIG. 12(b)** shows a target comprising a (second) PCB with rounded corners, and containing such a conductive portion.
**FIG. 12(c)** shows a target comprising a (second) PCB with chamfered corners, and containing such a conductive portion.
**FIG. 12(d)** shows a target comprising a rectangular PCB with four right corners (90°), and containing such a conductive portion.
**FIG. 13** shows another inductive sensor arrangement according to an embodiment of the present invention, comprising a target with a conductive portion having a rectangular shape and two chamfered corners, which can also be implemented on a printed circuit board of (slightly more than) 16 mm x 8 mm.
**FIG. 14** shows another inductive sensor arrangement according to an embodiment of the present invention, comprising a target with a conductive portion having a rectangular shape, which can also be implemented on a printed circuit board of (slightly more than) 16 mm x 8 mm.
**FIG. 15(a)** shows another inductive sensor arrangement according to an embodiment of the present invention, comprising a target with a conductive portion having an outer periphery defined by two arcs (e.g. one arc having a bow-shape, and one arc having a semi-circular shape), which can also be implemented on a printed circuit board of (slightly more than) 16 mm x 8 mm.
**FIG. 15(b)** shows a target in the form of a PCB with rounded corners containing such a conductive portion.
**FIG. 15(c)** shows a target in the form of a PCB with chamfered corners containing such a conductive portion.
**FIG. 15(d)** shows a target in the form of a rectangular PCB with four right corners (90°) containing such a conductive portion.
**FIG. 16** shows another inductive sensor arrangement according to an embodiment of the present invention, comprising a target with a conductive portion having an outer periphery defined by an overall rectangular shape with two rounded corners, and where one long side is replaced by an arc having a bow-shape, which can also be implemented on a printed circuit board of (slightly more than) 16 mm x 8 mm.
**FIG. 17** shows another inductive sensor arrangement according to an embodiment of the present invention, comprising a target with a conductive portion having an outer periphery defined by an overall rectangular shape with two chamfered corners, and where one long side is replaced by an arc having a bow-shape, which can also be implemented on a printed circuit board of (slightly more than) 16 mm x 8 mm.
**FIG. 18** shows another inductive sensor arrangement according to an embodiment of the present invention, comprising a target with a conductive portion having an outer periphery defined by an overall rectangular shape, where one long side is replaced by an arc having a bow-shape, which can also be implemented on a printed circuit board of (slightly more than) 16 mm x 8 mm. **FIG. 19(a) to FIG. 19(f)** show examples of other embodiments of targets comprising a metal plate, as can also be used in embodiments of the present invention.

The drawings are only schematic and are non-limiting. In the drawings, the size of some of the elements may be exaggerated and not drawn on scale for illustrative purposes. Any reference signs in the claims shall not be construed as limiting the scope. In the different drawings, the same reference signs refer to the same or analogous elements.

### Detailed description of illustrative embodiments

The present invention will be described with respect to particular embodiments and with reference to certain drawings but the invention is not limited thereto but only by the claims. The drawings described are only schematic and are non-limiting. In the drawings, the size of some of the elements may be exaggerated and not drawn on scale for illustrative purposes. The dimensions and the relative dimensions do not correspond to actual reductions to practice of the invention.

Furthermore, the terms first, second and the like in the description and in the claims, are used for distinguishing between similar elements and not necessarily for describing a sequence, either temporally, spatially, in ranking or in any other manner. It is to be understood that the terms so used are interchangeable under appropriate circumstances and that the embodiments of the invention described herein are capable of operation in other sequences than described or illustrated herein.

Moreover, the terms top, under and the like in the description and the claims are used for descriptive purposes and not necessarily for describing relative positions. It is to be understood that the terms so used are interchangeable under appropriate circumstances and that the embodiments of the invention described herein are capable of operation in other orientations than described or illustrated herein.

It is to be noticed that the term "comprising", used in the claims, should not be interpreted as being restricted to the means listed thereafter; it does not exclude other elements or steps. It is thus to be interpreted as specifying the presence of the stated features, integers, steps or components as referred to, but does not preclude the presence or addition of one or more other features, integers, steps or components, or groups thereof. Thus, the scope of the expression "a device comprising means A and B" should not be limited to devices consisting only of components A and B. It means that with respect to the present invention, the only relevant components of the device are A and B.

Reference throughout this specification to "one embodiment" or "an embodiment" means that a particular feature, structure or characteristic described in connection with the embodiment is included in at least one embodiment of the present invention. Thus, appearances of the phrases "in one embodiment" or "in an embodiment" in various places throughout this specification are not necessarily all referring to the same embodiment, but may. Furthermore, the particular features, structures or characteristics may be combined in any suitable manner, as would be apparent to one of ordinary skill in the art from this disclosure, in one or more embodiments.

Similarly, it should be appreciated that in the description of exemplary embodiments of the invention, various features of the invention are sometimes grouped together in a single embodiment, figure, or description thereof for the purpose of streamlining the disclosure and aiding in the understanding of one or more of the various inventive aspects. This method of disclosure, however, is not to be interpreted as reflecting an intention that the claimed invention requires more features than are expressly recited in each claim. Rather, as the following claims reflect, inventive aspects lie in less than all features of a single foregoing disclosed embodiment. Thus, the claims following the detailed description are hereby expressly incorporated into this detailed description, with each claim standing on its own as a separate embodiment of this invention.

Furthermore, while some embodiments described herein include some but not other features included in other embodiments, combinations of features of different embodiments are meant to be within the scope of the invention, and form different embodiments, as would be understood by those in the art. For example, in the following claims, any of the claimed embodiments can be used in any combination.

In the description provided herein, numerous specific details are set forth. However, it is understood that embodiments of the invention may be practiced without these specific details. In other instances, well-known methods, structures and techniques have not been shown in detail in order not to obscure an understanding of this description.

When in the present invention it it said that "the target is positioned" at a certain position, what is meant is that a reference point "Ct" of the target, defined as the center of the first circular arc portion, is located in that position.

The present invention relates to inductive angular position sensors and systems. As mentioned above, they typically comprise a substrate with an excitation coil (also known as "transmitter coil") and with a plurality of detection coils (also known as "receiver coils"), which are inductively coupled. The amount of coupling may be influenced by a coupling element (also known as "target") mounted in the vicinity of the transmitter and receiver coils. The excitation coil is typically excited with an AC signal, which induces eddy currents in the target. The receiving coils will generate signals (e.g. voltage signals) caused by the eddy currents in the target and by the current in the transmitting coil. The signals from the receiving coils are analysed in an electronic circuit in known manners (e.g. using known algorithms), and an angular position can be determined based on these signals.

While the general principles of determining an angle by means of an inductive angular position sensor are well known in the art, it remains a challenge to improve the accuracy of inductive angular position sensor systems for given mechanical tolerances, without negatively impacting its size or compactness or cost. Or stated in other words, it remains a challenge to relax the mechanical tolerances (e.g. of the relative position of the target with respect to the coils) without negatively influencing the accuracy, and without negatively impacting its size or compactness or cost.

Referring now to the Figures.

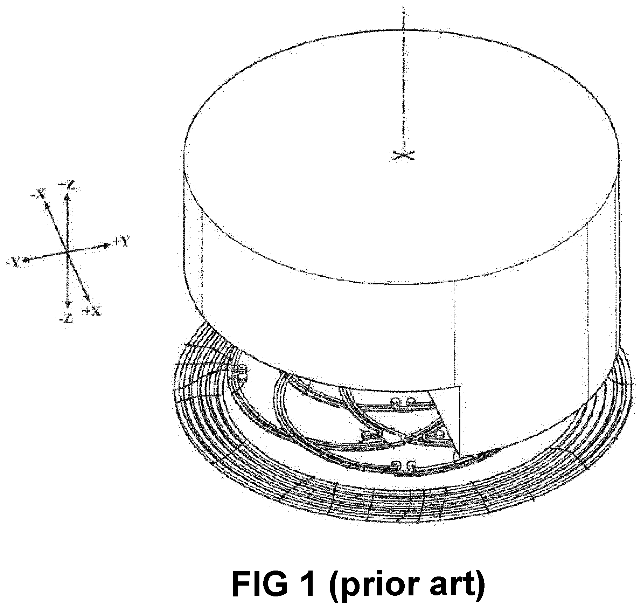

**FIG. 1** is a replica of FIG. 1(a) of WO2019226879(A1), incorporated herein by reference in its entirety. As described in the background section, WO2019226879(A1) describes an inductive position sensor assembly comprising: a printed circuit board (PCB) comprising a plurality of coils, and a shaft having a first (proximal) surface, at a first distance from the printed circuit board, and a second (distal) surface at a second distance from the printed circuit board. The proximal flat surface has a semi-circular shape with a straight edge, and functions as a target. Embodiments of the present invention may use printed circuit boards and/or a processing circuit similar or identical to those described in WO2019226879(A1).

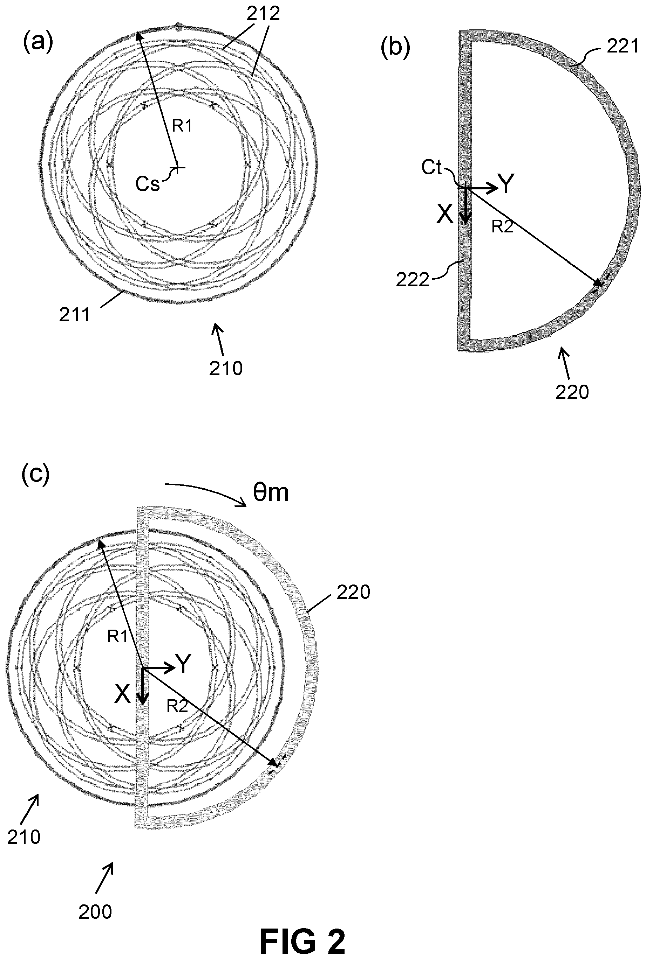

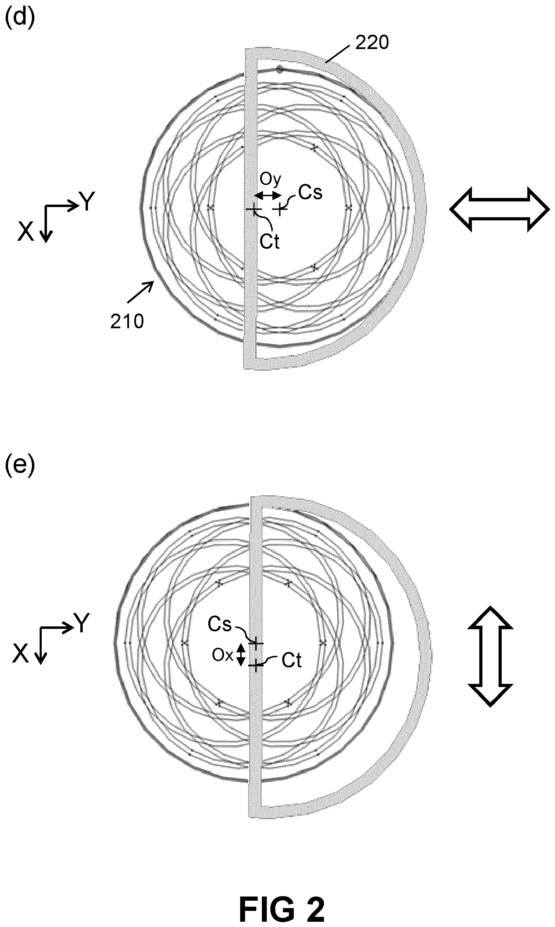

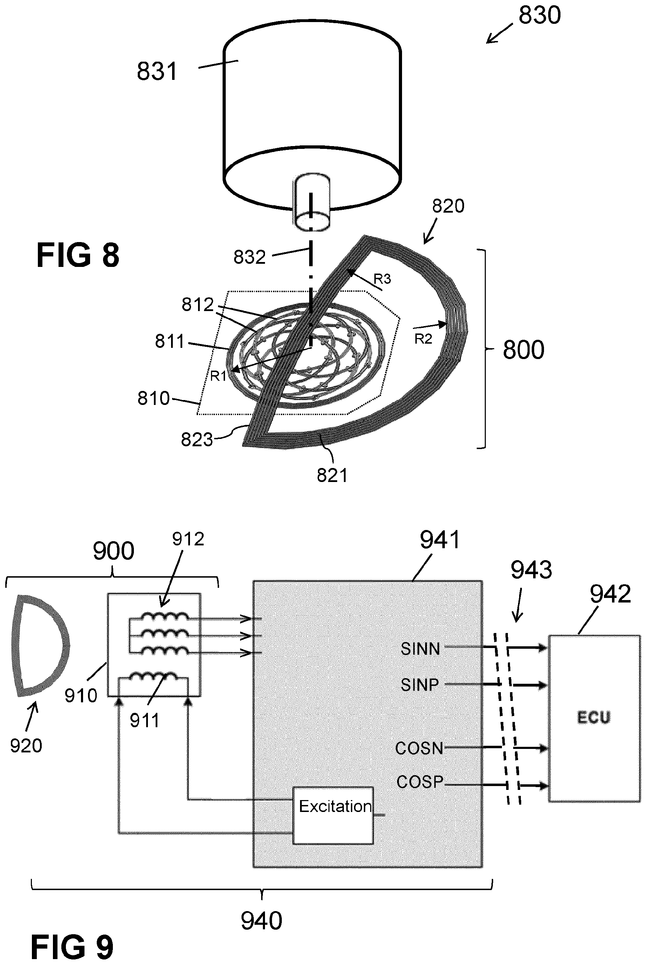

**FIG. 2(a)** shows a top view of such a printed circuit board (although the PCB itself is not explicitly shown) comprising at least one transmitter coil 211, and at least two or at least three, e.g. four or five or six receiver coils 212, as can be used in embodiments of the present invention. The coils 211, 212 may be formed as copper tracks of the PCB. The printed circuit board may be a two-layer PCB, or a four-layer PCB, or a PCB with more than four layers (e.g. six layers), although more than four layers is not preferred in view of the relatively high cost of such a PCB. The PCB may have a substantially circular shape, or a square shape, or a rectangular shape, or any other suitable shape, sufficiently large to accommodate the coils. While not explicitly shown in FIG. 2, but see e.g. the PCB 810 of FIG. 8 or the PCB 910 of FIG. 9, the PCB may further comprise an integrated circuit 941 operatively connected to said at least one transmitter coil 911 and to said plurality of receiver coils 912.

Referring back to FIG. 2(a), the at least one transmitter coil 211 has a substantially circular shape, with a first radius R1. It may be a spiral with a plurality of windings, for example having a number of windings in the range from 2 to 20, e.g. having 6 or 7 or 8 windings. The first radius R1 may be considered as an average radius between an inner radius and an outer radius of the spiral.

The at least two receiver coils 212 may each have a substantially circular (or elliptical) shape, with a radius (or with a distance to the focal points) smaller than the radius R1 of the transmitter coil 211. As can be seen, a projection of the receiver coils 212 (perpendicular to the PCB) is preferably located completely within a projection of the transmitter coil(s) 211.

The at least one transmitter coil 211 and the plurality of receiver coils 212 may be implemented in one or in multiple layers of the printed circuit board, in known manners, e.g. in the same way as described in WO2019226879(A1), (see e.g. FIG. 1H thereof).

The printed circuit board 810 may be mounted in a stationary position, e.g. stationary with respect to a motor housing (see e.g. FIG. 8 of the present application).

**FIG. 2(b)** shows a top view of an electrically conductive portion as part of a "target" 220 which can be used in conjunction with the substrate 210 of FIG. 2(a) containing said coils, to form an inductive angular sensor arrangement 200. The target 220 shown in FIG. 2(b) has an overall "D-shape", consisting of a circular arc portion 221 spanning an angle of about 180° (as seen from the rotation axis of the target), and a straight edge portion 222 connecting the end points of said circular arc. The conductive portion of the target 220 forms a coil with one or more windings. It may for example consist of a single conductive D-shaped closed loop having a predefined width, or it may consist of a D-shaped spiral forming a single loop with multiple windings. The electrically conductive portion 221, 222 may be part of a metallic target, or may be formed by copper tracks on a second substrate (not explicitly shown), for example a second printed circuit board.

FIG. 2(b) further shows a first axis X and a second axis Y. As can be seen, the target 220 of FIG. 2(b) is symmetrical with respect to the Y-axis, and is asymmetrical with respect to the X-axis.

FIG. 2(b) further shows a reference point "Ct" defined as the center of the circular arc portion 221. The reference point "Ct" may be located on the straight edge portion 222, but that is not absolutely required, it may also be slightly shifted, see e.g. FIG. 3(a).

**FIG. 2(c)** shows a top view of an inductive angular sensor arrangement 200 comprising a substrate 210 as shown in FIG. 2(a), and a target 220 as shown in FIG. 2(b). The target 220 may be positioned relative to the PCB 210 such that an orthogonal projection of the reference point "Ct" substantially coincides with the centre "Cs" of the transmitter coil 211 of the PCB 210. The target 220 may be mounted on a shaft 832 (see e.g. FIG. 8) which is rotatable with respect to the substrate 210, or vice versa.

As shown, the first radius (e.g. average radius) R1 of the transmitter coil 211 is smaller then the second radius (or average radius) R2 of the circular arc portion 221 of the target 220.

Preferably the reference point "Ct" of the target 220 is arranged at a predefined (nominal) distance Znom from the substrate 210 (see FIG. 4a) measured in the Z-direction perpendicular to the PCB, e.g. at about 1.3 mm distance (in this example), and preferably such that an orthogonal projection of the circular arc portion 221 of the target 220 on the substrate 210 containing the transmitter and receiver coils is substantially concentric with the overall circular shape of the transmitter coil 211. The ratio of R2/R1 for the particular example shown in FIG. 2(c) is approximately 120%, but other ratios can also be used.

When an AC current is applied to the at least one transmitter coil 211, the angular position θm of the target 220 can be calculated based on the signals obtained from the receiver coils in known manners, for example as described in WO2019226879(A1), but the present invention is not limited thereto and other algorithms may also be used.

In practice, however, the target 220 may not be perfectly aligned with respect to the substrate 210 containing the coils, due to mechanical mounting tolerances, and a projection of the reference point "Ct" of the rotatable target 220 may be radially offset from the reference point Cs of the substrate 210 containing the coils.

**FIG. 2(d)** illustrates an actual assembly wherein the rotation axis of the target 220 (passing through reference point Ct) is offset by an amount Oy from its nominal position in the Y-direction (i.e. along the symmetry axis of the target).

**FIG. 2(e)** illustrates an actual assembly wherein the rotation axis of the target 220 is offset by an amount Ox from its nominal position in the X-direction (i.e. perpendicular to its symmetry axis).

The inventors found that the calculated angular position for the assembly shown in FIG. 2(d) is only marginally influenced by a moderate offset Oy, wherein the target is shifted in a direction parallel to its symmetry axis, but that the calculated angular position for the assembly shown in FIG. 2(e) shows an error, if the target is misaligned by an offset Ox in the X-direction. It is noted that the difference between offset Ox in the X and offset Oy in the Y direction is rather artificial, because the target rotates about its reference point "Ct", meaning for example that, if the target of FIG. 2(d) is rotated over 90° about its rotation axis, a similar situation as shown in FIG. 2(e) arises. Hence, rather than considering an offset "Ox" in the X direction, and an offset "Oy" in the Y direction, one could simply consider a radial offset "Or" between a projection of the reference point "Ct" and the center point "Cs" on the PCB 210, or stated in other words, the radial offset between a rotation axis 832 of the target 220 and a virtual axis perpendicular to the substrate 210 passing through the center point "Cs".

**FIG. 3(a)** shows another inductive angular sensor arrangement 300, which can be seen as a variant of the inductive sensor arrangement shown in FIG. 2(c), wherein the ratio R2/R1 of the radius R2 of the circular arc segment 321 of the target 320 and the radius R1 (or average radius R1) of the transmitter coil is about 180%, which is larger than the 120% value of the sensor arrangement 200 shown in FIG. 2(c), and where the circular arc segment 321 spans an angle φ of about 190°, as seen from the rotation axis. The parameters R2 and φ can be varied independently. It was found that this arrangement 300 is much less sensitive to radial offset (than the arrangement 200), but it requires a much larger target, which has a negative influence on the compactness and on the cost. It would be nice if a solution could be found having substantially the same size as shown in FIG. 2(c), but having a reduced sensitivity to axial and/or radial offset.

**FIG. 3(b)** shows another inductive angular sensor arrangement 350 which can be seen as a variant of the sensor arrangement 200 of FIG. 2(c), wherein the target 321 comprises a substantially semi-circular disk with a straight edge. This target can be made from a metal plate, or may be formed by a copper plane of a printed circuit board, or the like.

**FIG. 4(a)** is an abstract representation illustrating the nominal (or ideal) position of the reference point "Ct" of the target (not shown) relative to the reference point "Cs" of the substrate 410 containing the coils, which in the example is situated at (X=0 mm, Y=0 mm, Z=1.3 mm).

FIG. 4(a) also shows an imaginary cylindrical space containing "mounting positions" of the reference point "Ct" when actually mounted with an axial offset from the ideal position within an axial tolerance margin of [-0.3 to +0.3] mm, and/or when with a radial offset from the ideal position within a radial tolerance margin of [0 to +0.6] mm, resulting in a first accuracy or a first angular error. The cylindrical space is defined by a lower imaginary disc located at Z=1.0 mm, and an upper imaginary disc located at Z=1.6 mm, each having a diameter of twice the maximum radial offset, in the example 1.2 mm.

**FIG. 4(b)** is an abstract representation illustrating the same nominal (or ideal) position of the reference point "Ct" of the target (not shown) relative to the reference point "Cs" of the substrate 410 containing the coils, but with an increased (or extended) axial tolerance margin of [-0.5 to +0.5] mm, and an increased (or extended) radial tolerance margin of [0 to +0.7] mm, resulting in a second accuracy (or second angular error) for all mounting positions for which the reference point "Ct" of the target is mounted inside a second imaginary cylindrical space defined by an lower imaginary circle located at Z=0.8 mm, and an upper imaginary circle located at Z=1.8 mm, each having a diameter of twice the maximum radial tolerance, hence 1.4 mm.

The inventors of the present invention had the task of improving the inductive angular sensor arrangement shown in FIG. 2(c) such that the additional error due to the increased axial and/or radial tolerance margin (also referred to herein as "axial drift error" and/or "radial drift error") is as small as possible. Or stated in other words, they had the task of providing an inductive angular sensor arrangement similar to the one shown in FIG. 2(c), having substantially the same dimensions, but wherein additional error due to the increased axial and/or radial tolerance margin as illustrated in FIG. 4(b) is as small as possible. Or stated otherwise, they had the task to provide an inductive angular sensor arrangement similar to the one shown in FIG. 2(c), and preferably having substantially the same overall size, and yielding a angular error which is as small as possible for target mounting positions for which the reference point "Ct" is situated inside the large cylindrical space shown in FIG. 4(b).

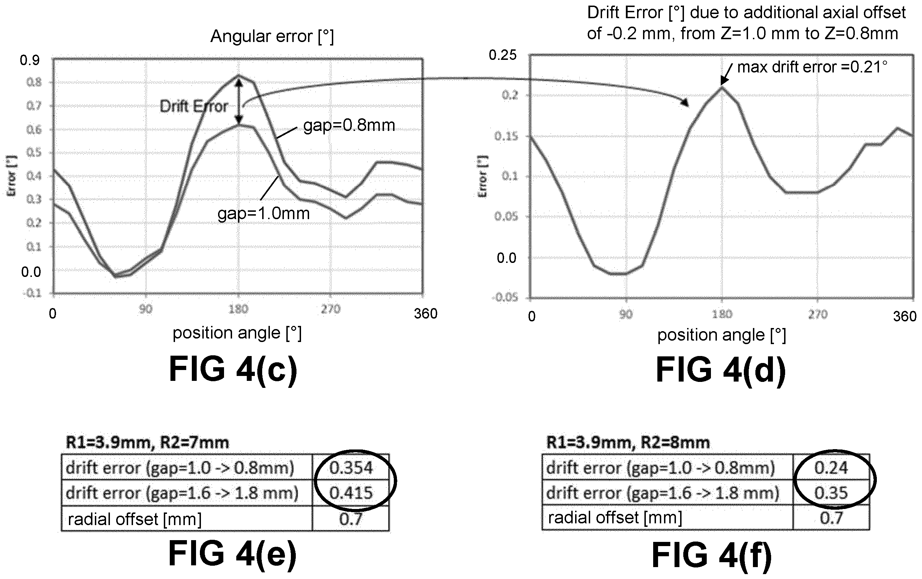

**FIG. 4(c)** shows two exemplary error waveforms, one showing the angular error for a target situated at Z=1.0 mm, and one for a target situated at Z=0.8 mm, as a function of the angular position of the target, ranging from 0° to 360°. What is shown is the so called "linearity error", which only takes into account the geometrical aspects, and does not include for example quantization errors of the digital processing circuit.

Such waveforms can be obtained by computer simulations, in manners which are known per se in the art. In order to reduce the computation-time, the error waveforms were calculated for angular steps of 15°, but of course, a larger step or a smaller step can also be used. As can be seen, the worst case "linearity error" for target mounting positions at Z=1.0 mm (first Lower position) is equal to about 0.6°, whereas the worst case linearity error for target mounting positions at Z=0.8 mm (extended Lower position) is equal to about 0.81°, which is an increase of about 0.21°. It can also be seen that the worst case error for both waveforms occurs for substantially the same angular position (in the example at about 180°).

**FIG. 4(d)** shows the difference between the two waveforms of FIG. 4(c), representing the so called "drift error" due to the additional offset in the negative Z-direction from Z=1.0 mm to Z=0.8 mm. As can be seen, the maximum drift error is 0.21° in the example.

**FIG. 4(e)** shows a table with the "drift error" of an angular sensor arrangement 200 as shown in FIG. 2(c) comprising a substrate 210 having a transmitter coil radius R1=3.9 mm, and a D-shaped target 220 having a target radius (i.e. the radius or average radius R2 of the circular arc portion 221) of R2=7.0 mm spanning an angle of about 180°, and having a straight edge portion 222, for the extended tolerance margin shown in FIG. 4(b), i.e. if the target is mounted such that the target reference point "Ct" is located inside the large, virtual cylinder shown in FIG. 4(b).

As can be seen, the "drift error" due to the additional axial tolerance from Z=1.0 mm to Z=0.8 mm at a radial offset of 0.7 mm amounts to about 0.354°; and the "drift error" due to the additional axial tolerance from Z=1.6 mm to Z=1.8 mm at a radial offset of 0.7 mm amounts to about 0.415°, which is relatively large. The inventors had the task of trying to reduce this value somehow.

**FIG. 4(f)** shows a table with the "drift error" of an angular sensor arrangement as shown in FIG. 2(c) comprising a substrate having a transmitter coil radius R1=3.9 mm, and a D-shaped target having a target radius R2=8.0 mm (instead of 7.0 mm) spanning an angle of about 180°, and having a straight edge. As can be seen, the "drift error" due to the additional axial tolerance from Z=1.0 mm to Z=0.8 mm at a radial offset of 0.7 mm amounts to about 0.24°, which is smaller than 0.354°; and the "drift error" due to the additional axial tolerance from Z=1.6 mm to Z=1.8 mm at a radial offset of 0.7 mm amounts to about 0.35°, which is smaller than 0.415°.

Comparison of **FIG. 4(e)** and **FIG. 4(f)** shows that the "drift error" can be reduced by using a target having a larger radius R2. Unfortunately this requires more space, which is not always available (e.g. inside a motor housing), and/or which requires a target (e.g. a metal plate, or a second printed circuit board) with an increased size and an increased cost. The inventors wanted to find another solution having a comparable "drift error" as shown in FIG. 4(f), but without substantially increasing the target size.

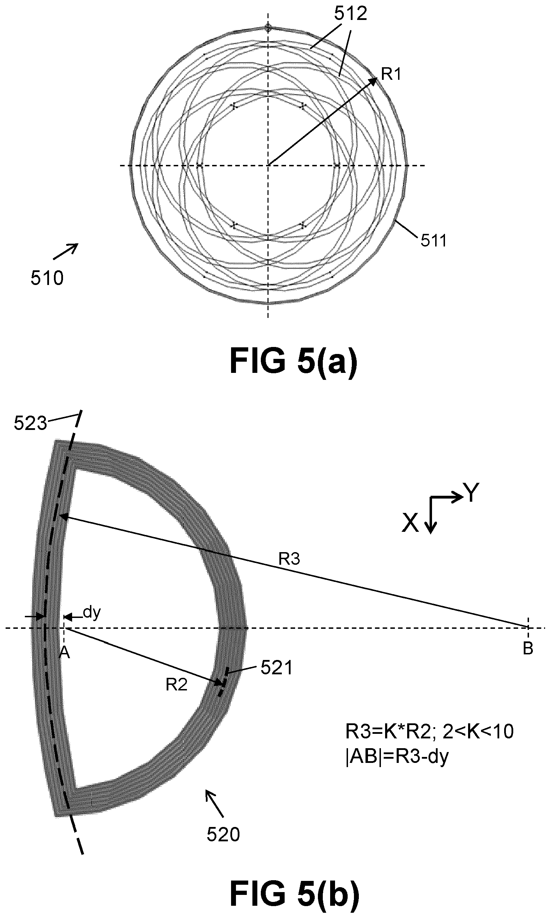

The inventors came to the idea of using a target with a modified geometry, more in particular to replace the straight edge portion by a second arc portion (or a "bow") with a small curvature (or large radius R3), thus resulting in a target consisting of two curved portions, for example as illustrated in FIG. 5(b).

The present invention thus provides an inductive angular sensor arrangement (e.g. 700a, 700b), comprising: a (first) substrate 510 and a target 520. The substrate 510 comprises at least one transmitter coil 511 and at least two receiver coils 512. The at least one transmitter coil 511 has a substantially circular or annular shape with a first radius (e.g. average radius) R1. The target 520 is rotatably arranged relative to the substrate 510. The target 520 comprises an electrical conductive portion with a convex shape having an outer periphery defined by a first curve 521 being a circular arc with a radius R2 larger than the radius R1 of the at last one transmitter coil, and by a second curve 523 or arc having a curvature smaller than (e.g. a radius larger than) that of the first curve 521. It is counter-intuitive that the linearity error can be reduced by replacing a straight edge by an arc.

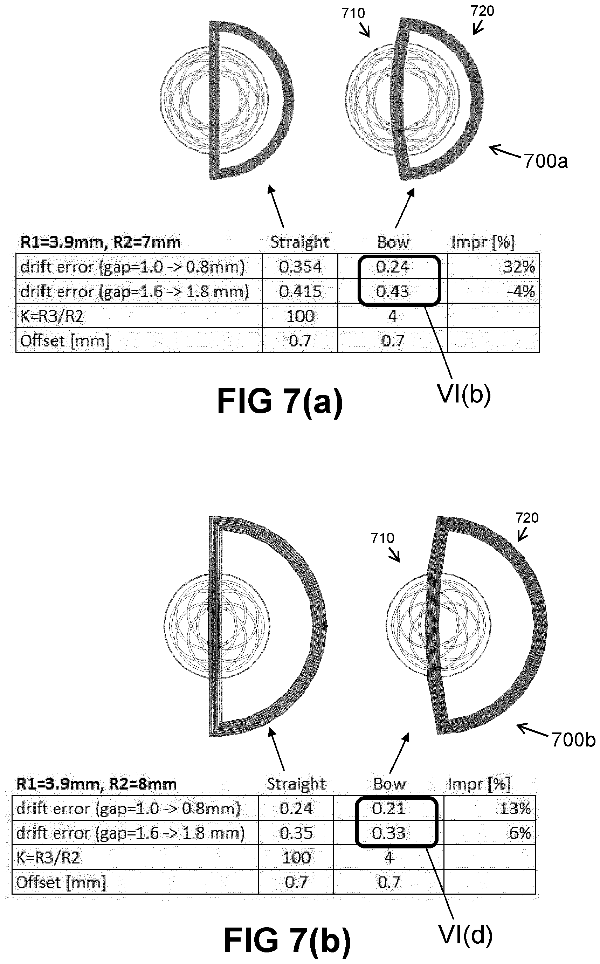

Illustrative examples of such inductive angular sensor arrangements 700a, 700b are shown in FIG. 7(b) and FIG. 7(b). An illustrative example of a substrate 510 and a target 520 of such an inductive angular sensor arrangement is shown in FIG. 5(a) and FIG. 5(b), respectively.

**FIG. 5(a)** shows a substrate 510 with at least one transmitter coil 511 and at least two receiver coils 512, as can be used in embodiments of the present invention. As mentioned above, if the transmitter coil 511 contains multiple windings, R1 can be considered as the average of the outer radius and the inner radius of these windings. In preferred embodiments, the difference between the inner and outer radius is smaller than 10%, or smaller than 5%, or smaller than 4%, or smaller than 3%, or smaller than 2%.

**FIG. 5(b)** shows a target 520 having a curved edge portion 523 instead of a straight edge portion, as can be used in embodiments of the present invention. In the specific example of FIG. 5(b) the second curve 523 is a circular arc with a radius R3, but that is not absolutely required for the invention to work, and other curves such as for example an elliptical curve, or a curve of a parabola, or another dome-shaped curve may also work. Such a target 520 containing a curved portion 523 (or "a bow") instead of a straight portion is referred to herein as a "bow-shaped" target, as opposed to a "D-shaped" target. Other examples of "bow-shaped" targets will de described further (see e.g. FIG. 15(a) to FIG. 18, and FIG. 19(c) to FIG. 19(f).

As will be discussed further, simulations were performed, and it was surprisingly found that an inductive angular sensor arrangement 700a, 700b comprising such a substrate and a "bow-shaped" target having an appropriate size, yields a drift error lower than that of a D-shaped target having similar dimensions. This is especially true for values of R3 in the range from about 2*R2 to about 10*R2. A close-to-optimal value of R3 may be values in the range from about 3.0*R2 to about 6.0*R2. An optimal value of R3 may be a value in the range from about 4.0*R2 to about 5.0*R2, but the exact value of R3 is not critical for the invention to work.

As can be seen in FIG. 5(b), the (first) circular arc segment 521 may span an angular range equal to about about 180°, or slightly smaller than 180° (as seen from the rotation axis of the target). The second arc 523 may pass through the center A of the (first) circular arc segment 521, or may be slightly shifted by a distance "dy". Or stated in other words, the center B of the second circular arc 523 may be spaced from the center A of the first circular arc 521 by a value equal to (R3-dy). The value of dy may be a value in the range from about 2% to about 15% of R2, or from 5% to 10% or R2, for example equal to about 7.5% of R2. Also the value of "dy" is not critical for the invention to work.

In case the conductive portion of the target is a coil comprising one or more winding having a predefined width, the radii R2 and R3 can be considered as the average between the outer radius and the inner radius of the respective arc portions.

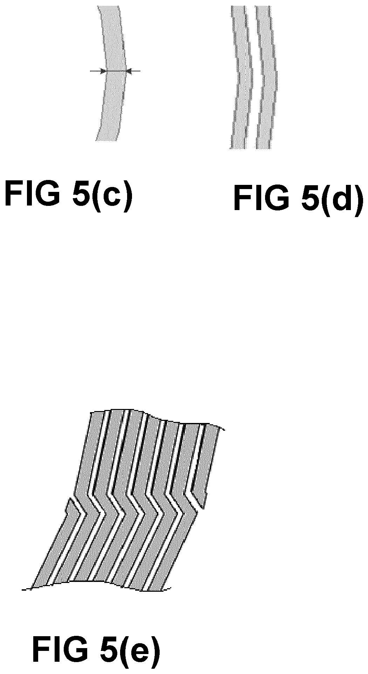

**FIG. 5(c) to FIG. 5(e)** show examples of possible implementations of the conductive portion of the target, but the present invention is not limited to these examples, and other conductive portions may also be used.

**FIG. 5(c)** shows that the conductive portion of the target may comprise or consist of a single metallic strip, e.g. a copper track on a printed circuit board, forming a closed loop. This may be implemented for example on a single side of a PCB.

**FIG. 5(d)** shows that the conductive portion of the target may comprise multiple separate metallic strips, each forming a separate closed loop. In the example, the loops are situated in a single plane, but that is not absolutely required, and for example, a first and a second loop may be implemented on a first side of a two-layer PCB, and a third and a fourth loop may be implemented on a second side of a two-layer PCB.

**FIG. 5(e)** shows an example of a conductive portion of the target in the form of a coil having multiple windings. The start and the end position of the coil needs to be connected, for example using a "via" (not shown), which is a technique very well known in the art of PCB design.

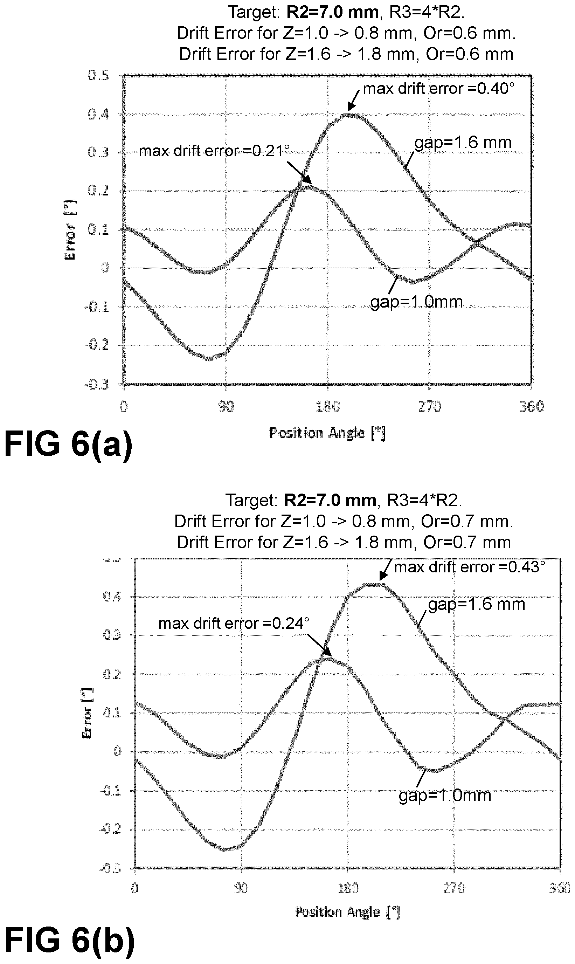

**FIG. 6(a) to FIG. 6(d)** show waveforms for an angular sensor system comprising a bow-shaped target as proposed by the present invention, as can be obtained by computer-simulations.

For completeness it is mentioned that the specific waveforms were simulated for a target radius R2=7 mm or R2=8 mm, shift dy=0.6 mm, R3=4*R2, the target contained 14 windings, the radius R1 of the transmitter coil = 3.9 mm, the transmitter coil contained 6 windings, but of course, the present invention is not limited to these specific values.

**FIG. 6(a)** show "drift error waveforms" for an angular sensor arrangement having a "bow-shaped target" as shown in FIG. 5(b), having a first target radius R2=7.0 mm, and having a second target radius R3=4*7.0 mm =28.0 mm, for a radial offset up to 0.6 mm, (i) due to an additional axial offset from Z=1.0 mm to Z=0.8 mm, resulting in a (worst case) drift error of 0.21°; and (ii) due to an additional axial offset from Z=1.6 mm to Z=1.8 mm, resulting in a (worst case) drift error of 0.40°.

**FIG. 6(b)** is a variant of FIG. 6(a), showing "drift error waveforms" for the same angular sensor arrangement having a "bow-shaped target", but for a radial offset up to 0.7 mm instead of 0.6 mm. As can be seen, the drift error amounts to 0.24° and 0.43° respectively.

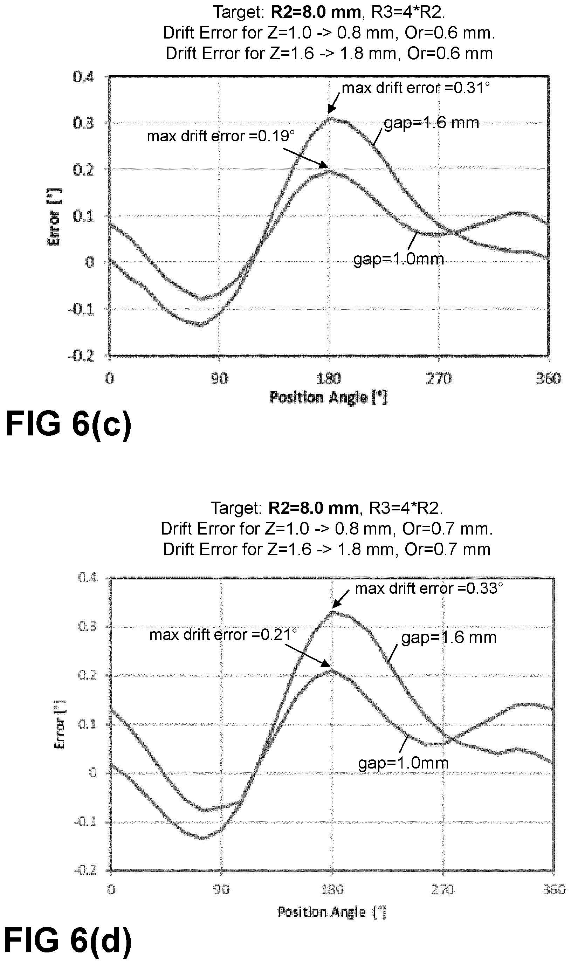

**FIG. 6(c)** is another variant of FIG. 6(a), for a "bow-shaped target" having a radius R2=8 mm instead of 7 mm, and having a radius R3=4*8=32 mm instead of 28 mm. As can be seen, the drift error amounts to 0.19° and 0.31° respectively. By comparing FIG. 6(a) and FIG. 6(c) it can be seen that the drift error can be significantly reduced by choosing a larger radius R2 (in the example: 8 mm instead of 7 mm), but this requires a larger target, which increases the cost, and is not preferred.

**FIG. 6(d)** is a variant of FIG. 6(b), for a "bow-shaped target" having a radius R2=8 mm instead of 7 mm, and having a radius R3=4*8=32 mm instead of 28 mm. As can be seen, the drift error amounts to 0.21° and 0.33° respectively. By comparing FIG. 6(b) and FIG. 6(d) it can be seen that the drift error can be significantly reduced by choosing a larger target, but this increases the cost, and is not preferred.

**FIG. 7(a)** shows a table illustrating the drift error for an angular sensor arrangement comprising a "bow-shaped target" as proposed by the present invention, compared to the drift error of a D-shaped target having a straight edge, for a target radius R2=7 mm.

As can be seen, using a bow-shaped target as proposed by the present invention, instead of a target with a straight edge, significantly reduces the drift error for an axial offset from Z=1.0 mm to 0.8 mm, from 0.354° to 0.24° which is an improvement of about 32%, which is huge, without requiring a larger target size. As can also be seen, the drift error increases by approximately the same amount as a D-shaped target, for an axial offset from 1.6 mm to 1.8 mm.

Since the drift error is larger for Z=1.6 mm than for Z=1.0 mm, this probably also means that if the nominal position is changed to Z=1.2 mm instead of Z=1.3 mm, an angular position sensor system is obtained having an extended tolerance margin with an axial offset Oz=[-0.4..+0.4] mm, and a radial offset up to 0.7 mm, at the expense of only 0.24° drift error, which is smaller than the error of 0.354° in case of a D-shaped target.

**FIG. 7(b)** shows a table illustrating the drift error for an angular sensor arrangement comprising a "bow-shaped target" as proposed by the present invention, compared to the drift error of a D-shaped target having a straight edge, for a target radius R2=8 mm. As can be seen, using a bow-shaped target reduces the drift error related to an axial offset from Z=1.0 mm to Z=0.8 mm from 0.24° to 0.21° which is an improvement of about 13%, and reduces the drift error related to an axial offset from Z=1.6 mm to Z=1.8 mm from 0.35° to 0.33°, which is an improvement of 6%.

**FIG. 8** is a schematic representation of a motor assembly 830 comprising an angular sensor arrangement 800 as proposed by the present invention, and an electrical motor 831.

The angular sensor arrangement 800 comprises a substrate 810 comprising at least one transmitter coil 811 and a plurality of receiver coils 812, and a "bow-shaped target" 820 comprising a conductive portion as described above, namely having a periphery with a first circular arc portion 821 with radius R2, and having a second curved portion 823, which may be a circular portion having a radius R3. The radius R3 may be 3 to 7 times larger than R2. The target 820 may be connected to a shaft 832 of the motor 831, and may be located inside or outside of the motor housing. The substrate 810 containing the coils 811, 812 may be fixedly mounted to the motor housing.

**FIG. 9** is a high-level block-diagram illustrating an angular sensor system 940, comprising an angular sensor arrangement 900 as described above, or as will be described further, and an integrated circuit 941 operatively connected to the angular sensor arrangement 900, and configured for exciting the at least one transmitter coil 911 with an AC signal, and for receiving signals from the receiver coils 912. In some embodiments, these signals may be converted into a sine-like and a cosine-like signal, using known algorithms. The integrated circuit 941 may be an interface circuit, configured for outputting the sine-like and cosine-like signal to an external processor, e.g. to an ECU 942 via a bus 943. In another embodiment (not shown), the integrated circuit 941 may be further configured for determining an angular position based on the sine-like and cosine-like signal, and for outputting the calculated angular position.

In **FIG. 5(b)** a target is shown with two circular arc segments. One of the contributions of the present invention is the idea of replacing the straight edge by a second arc segment 523, also referred to herein as "a bow". A further contribution of the present invention is to determine the optimal size of that arc segment or bow 523.

A very good, or the optimal radius R3 of the second arc portion 523 may be determined by performing the following method for a plurality of bow-shaped targets, and selecting the shape with the best results. Of course, it is also possible to evaluate the result of non-circular arcs, also elliptical arcs, parabolic arcs, etc. The method may comprise the following steps:
a) providing a computer model for the angular sensor assembly having a predefined substrate, and a predefined nominal position, and a target with a first, circular arc segment with a predefined radius R2, and a second arc segment with a radius R3, which model allows to simulate the signals received by the at least two receiver coils, wherein the computer model uses at least three parameters, including: a radial offset (Or) and an axial offset (Oz) with respect to the predefined (nominal) position of the target relative to the substrate containing the coils, and an angular position (θ) of the target relative to its rotation axis;
b) simulating signals that will be received by the at least two receiver coils, when the transmitter coil is excited with an AC signal, and the target is in the predefined (nominal) position, for a plurality of angular positions (θ) of the target, and calculating a plurality of reference angle values based on these simulated signals;
c) simulating signals that will be received by the at least two receiver coils, when the transmitter coil is excited with an AC signal, and the target is in an actual position which is axially offset (Oz) and/or radially offset (Or) from said predefined (nominal) position, for said plurality of angular positions (θ) of the target, and calculating a plurality of actual angle values based on these simulated signals;
d) calculating a worst case (or maximum) error (referred to herein as "drift error due to the axial and/or radial offset") between the reference angle values and the actual angle values as the drift error for this axial offset (Oz) and radial offset (Or) offset, and for this angular position (θ) of the target.

Step c) and step d) may be repeated for various target positions (Oz, Or) and orientations (θ). In practice, it suffices to perform these steps only for positions located on the imaginary circles shown in FIG. 4(b), and for a discrete number of angular positions, e.g. in steps of 15°. This yields waveforms such as the ones shown in FIG. 4(c) and FIG. 4(d).

Many variants of this algorithm are possible, for example, instead of calculating the drift error, one could simply store the error waveforms itself for each target geometry, or for each set of parameters, and select the geometry or the set of parameters yielding the smallest worst case error.

Other optimizations may include to first determine the waveforms with a rough granularity of e.g. 15°, and to then perform additional simulations in the vicinity of the maximum.

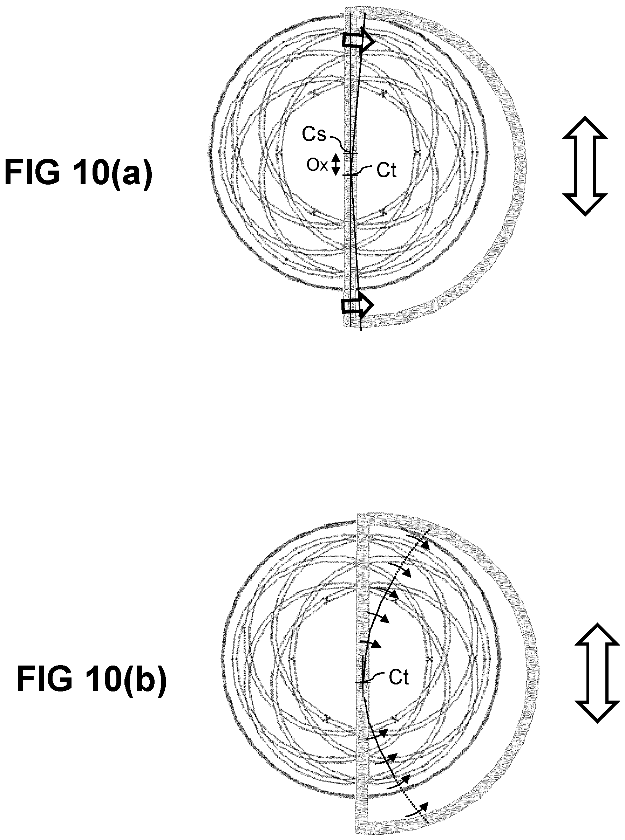

Referring to **FIG. 10(a)** and **FIG. 10(b)****,** another method of determining a close-to-optimal shape or an optimal shape of the second arc segment 523 could be the following. One could start from a D-shaped target having a circular arc segment with radius R2 and a straight edge, as shown in **FIG. 10(a)****.** One could then offset the target over a certain (e.g. relatively small) distance "Or", and determine the resulting angular error corresponding to that distance, e.g. by simulation, or by actually building such a target and measuring the angular error. One could then adjust the geometry of the straight edge so as to compensate for this error, e.g. by splitting the single straight edge in two pieces, and by rotating these linear pieces over the angular error divided by two (because the target needs to be symmetric). In a next iteration, the offset Ox is slightly increased, and the angular error is calculated for the target having an edge with two linear pieces as shown in FIG. 10(a). Each linear pieces can be split in two, thus yielding a target with four linear pieces not forming a straight edge, and one could determine the angular error for two offset values, and one could rotate the individual pieces so as to compensate for the respective angular errors, etc. After N iterations (e.g. N=10 iterations), the straight edge would be replaced by a piece-wise linear curve having 2*N=20 linear segments, wherein adjacent linear segments would be slightly rotated relative to one another, each time over an amount that substantially compensates for the angular error before the split. This is illustrated in **FIG. 10(b)****,** in which the rotation angles between adjacent linear pieces are exaggerated for illustrative purposes. The linear segments may all have the same length, or may have different lengths. having the benefit of the present disclosure, the skilled person can easily think of variants of this method.

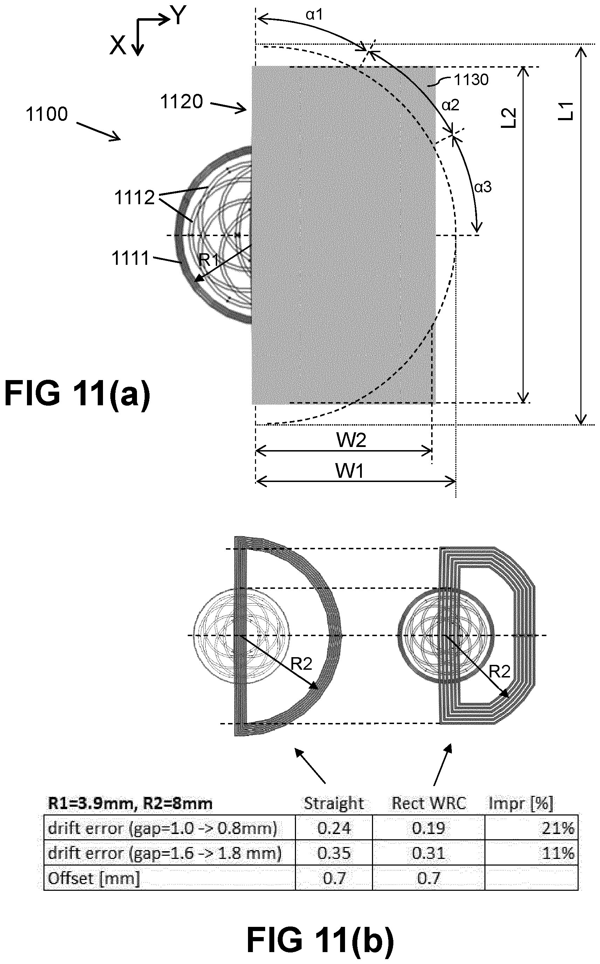

**FIG. 11(a)** shows another inductive sensor arrangement 1100, comprising a first substrate (not explicitly shown) comprising at least one transmitter coil 1111 and a plurality of receiver coils 1112; and a target 1120 which is rotatable with respect to the substrate with the coils. The target 1120 comprises a second substrate (not explicitly shown in FIG. 11(a)) comprising an electrically conductive portion. In the example, the electrically conductive portion comprises 6 windings, but the present invention is not limited thereto, and the number of windings can be larger than 6, e.g. 10 to 20 windings, e.g. 12 windings, or smaller than 6, e.g. 2 to 5 windings.

In the embodiment shown in FIG. 11(a), the conductive portion has an inner periphery and an outer periphery, each periphery having the shape of a rectangle with two rounded corners. Or stated in other words, the outer periphery can be defined as a first linear portion (on the left of FIG. 11(a)) extending in the X-direction and having a length L2, two second linear portions (at the top and the bottom of FIG. 11(a) perpendicular to the first linear portion and having a length of approximately W2/2, two arc segments (at the top right, and the bottom right of FIG. 11(a)), each spanning an angle of about 30°, and a third linear portion (on the right of FIG. 11(a)), having a length of about L2/2. The angles α1, α2, α3 may be approximately equal to 30°. This target can be implemented on a rectangular PCB 1130 (shown in semi-transparent overlay) having a length (slightly larger than) L2 and a width W2.

For comparison, it is shown that a classical "D-shaped" target having the same radius R2 spanning an angle of about 180° (shown in dotted line) would require a rectangular PCB having a length L1 and a width W1. As can be appreciated from FIG. 11(a), L2 is smaller than L1, and W2 is smaller than W1, hence the size A2=W2*L2 of the second PCB containing the conductive portions having an inner and outer periphery having a shape of a rectangle with two rounded corners of radius R2, as illustrated in FIG. 11(a) is smaller than the size A1=W1*L1 of a rectangular PCB comprising a classical "D-shaped" target. For a numerical example, if the angles α1, α2, α3 are approximately equal to 30°, the ratio of A2/A1 is approximately equal to 77%, which means a significant cost saving.

**FIG. 11(b)** shows simulation results for an inductive sensor arrangement having a classical D-shaped target (column with "Straight"), and or a rectangular target with two rounded corners as shown in FIG. 11(a). Very surprisingly, the drift error for the rectangular target with rounded corners of radius R2 (column with "Rect WRC") is much smaller than the drift error of the classical D-shaped target with the same radius R2. As can be seen, the drift error for a gap distance from 1.0 mm to 0.8 mm is 0.19° instead of 0.24°, which is an improvement of about 21%; and the drift error for a gap distance from 1.6 mm to 1.8 mm is 0.31° instead of 0.35°, which is an improvement of about 11%. This result is even more surprising since it rarely happens that a cheaper solution also provides a technical improvement.

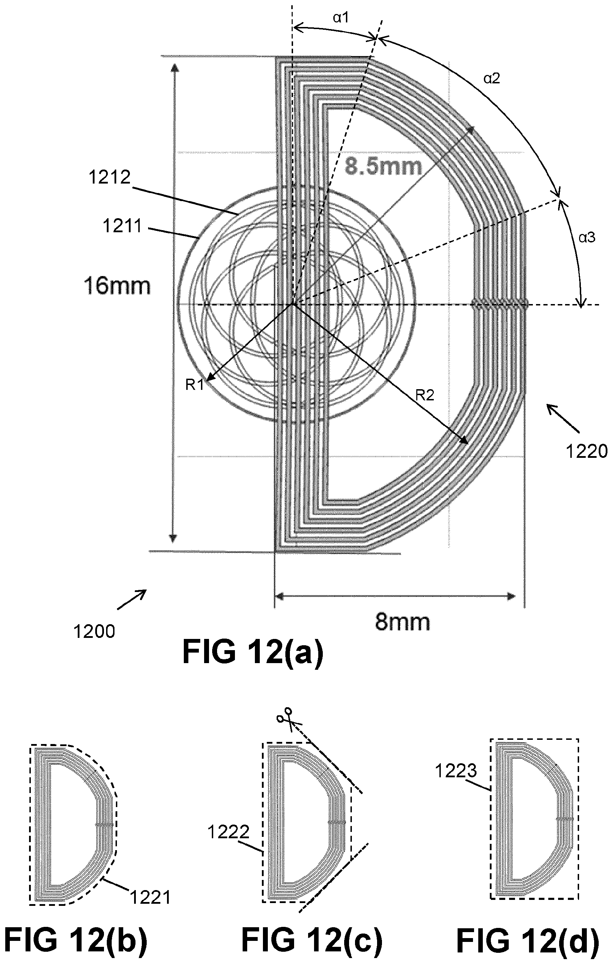

**FIG. 12(a)** shows another example of a target 1220 having a conductive portion with an outer periphery having a rectangular shape with two rounded corners. This conductive portion can be implemented on a PCB having a length of (slightly more than) about 16 mm and a width of (slightly more than) about 8 mm. In the example shown in FIG. 12(a), the radius R1 of the transmitter coil is equal to about 7.4 mm, the (average) radius R2 of the rounded corners is equal to about 8.0 mm, the angle α1 is equal to about 18°, the angle α2 is equal to about 50°, and the angle α3 is equal to about 22°.

But of course, the present invention is not limited to these particular examples, and targets having an electrically conductive portion similar to that shown in FIG. 11(a) and FIG. 12(a), but with different dimensions, are also contemplated. In preferred embodiments, the angle α2 may be a value in the range from 20° to 60°, and the sum of the values α1+ α3 thus being a value in the range from 30° to 70°. The angle α1 is preferably larger than 10°, and the value of α3 is preferably larger than 10°. The skilled person having the benefit of the present disclosure can find optimal values for which the angular error or the drift error of the angular sensor system are minimal for example by performing simulations.

As can be seen, this target can be implemented on a printed circuit board (PCB) of (slightly larger than) about 16 mm x 8 mm, and when the corners of the PCB are cut or milled or otherwise removed, this target has a turning radius of about 8.5 mm about its rotation axis. As explained above (see e.g. FIG. 11(b)), this target provides a better accuracy than a pure D-shaped target having an outer periphery consisting of one straight edge and a semi-circle.

**FIG. 12(b)** shows a target comprising a PCB with rounded corners containing such a conductive portion. The PCB is typically somewhat larger than the conductive portion, in order to reduce the risk of damaging the tracks when cutting or milling the PCB, as is known in the art. The size of the PCB shown in FIG. 12(b) to FIG. 12(d) may be slightly exaggerated for illustrative purposes. The corners can for example be removed by milling, but such operation increases the manufacturing cost of the PCB. As mentioned above, such a PCB has the advantage that the turning ratio (maximum outer radius from the center of the rotation axis on which the target is mounted) is smaller than that of FIG. 12(d), but is more expensive to produce. The accuracy of the angular sensor system using any of the targets shown in FIG. 12(b) to FIG. 12(d), however, is substantially identical, which is better than that of an angular sensor system using a D-shaped target, as shown e.g. in FIG. 2(a).

**FIG. 12(c)** shows a target comprising a PCB 1222 with chamfered corners containing the same conductive portion as shown in FIG. 12(a). This PCB 1222 may be somewhat cheaper to produce than the PCB 1221 with rounded corners, because these corners can be cut or milled along a straight line. This PCB 1222 is more expensive than the rectangular PCB 1223 of FIG. 12(d), but offers the advantage that its turning radius is smaller. Depending on the specific application, the turning radius may or may not be limited.

**FIG. 12(d)** shows a target comprising a rectangular PCB 1223 with four right corners (90°) containing the conductive portion of FIG. 12(a). This PCB 1223 is easier to produce, and thus cheaper than those of FIG. 12(b) and FIG. 12(c), assuming all other aspects (e.g. number of layers) are the same.

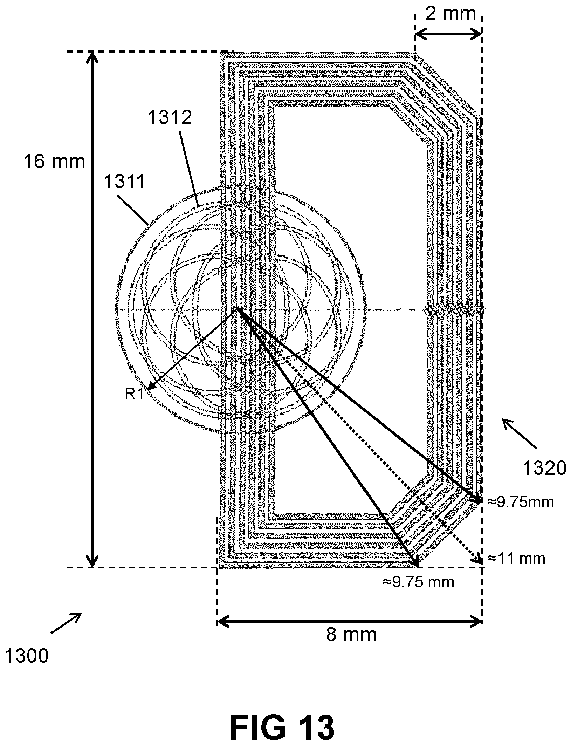

**FIG. 13** shows another inductive sensor arrangement 1300, which is a variant of the inductive sensor arrangement 1200 of FIG. 12(a), the main difference being that the target 1320 has a rectangular shape with two chamfered corners. This target 1320 can also be implemented on a printed circuit board of (slightly more than) 16 mm x 8 mm, similar to those of FIG. 12(b) to FIG. 12(d). If there is sufficient space, the corners of the PCB do not need to be removed, and the turning radius would be equal to about 11.0 mm. If however, this space is not available (e.g. inside a motor housing), the corners of the PCB can be removed, and the turning radius can be reduced to about 9.75 mm (in this example).

Similar to the example of FIG. 11(b), this target 1320 will provide an improved accuracy as compared with a D-shaped target as shown for example in FIG. 2(b) that fits on the same PCB. It is noted that in the example of FIG. 13, a triangular corner with two legs of about 2.0 mm are cut, but the present invention is of course not limited to this particular example, and other chamfers, smaller or larger than the one shown here, can also be used. As a rule of thumb, the smaller the chamfered corners (the less material is cut), the lower the sensitivity for position offset, and thus the higher the accuracy.

This electrical conductor portion can be implemented on various printed circuit boards, similar to those shown in FIG. 12(b) to FIG. 12(d), having e.g. two rounded corners, or having two chamfered corners, or having four right corners.

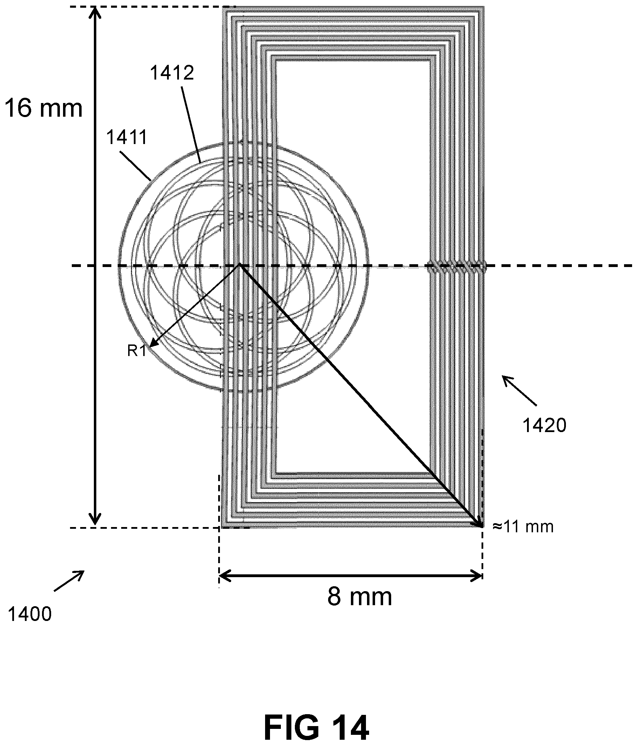

**FIG. 14** shows another inductive sensor arrangement 1400, which can be considered a variant of the inductive sensor arrangement 1200 of FIG. 12 without the rounded corners, or as a variant of the inductive sensor arrangement 1300 of FIG. 13 without the chamfered corners.

This target 1420 can also be implemented on a printed circuit board of (slightly more than) 16 mm x 8 mm. No cutting or milling for removing the corners is required, hence this target can be provided at a lower cost, since it is easier to make. However, the turning radius would be equal to about 11.0 mm. The accuracy of this sensor arrangement is about the same as that of FIG. 13. When compared to an inductive sensor system with a D-shaped target (as in FIG. 2(b)), the sensor system of FIG. 14 can be provided at a lower cost, and provides a better accuracy (e.g. in terms of a lower sensitivity of position offset), but requires a slightly larger "turning radius" (about 11 mm as compared to about 8.0 mm), thus cannot be used in all applications, e.g. when the target 1420 has to built-in a housing with an inner diameter smaller than 22 mm.

**FIG. 15(a)** shows another inductive sensor arrangement 1500, comprising a target 1520 with an outer periphery defined by two arcs, as was explained in FIG. 7(a) and FIG. 7(b), but in this example implemented on a printed circuit board of (slightly more than) 16 mm x 8 mm. The (average) radius R2 (of the semi-circle) is equal to about 8 mm, and the turning radius is equal to about 8.3 mm.

As described above, if the corners of the PCB on which the target 1520 is implemented are removed (e.g. by milling), this embodiment offers the advantages of an improved accuracy (lower sensitivity to position offset) and of approximately the same "turning radius" as that of a D-shaped target as shown in FIG. 2(b), or in short: a better accuracy for the same cost and the same compactness.

**FIG. 15(b)** shows a target comprising a PCB 1521 with an overall semi-circular shape. Such a shape can be obtained for example by milling, but this operation increases the cost of the PCB. As mentioned above, such a PCB 1521 has the advantage that the turning ratio (maximum outer radius from the center of the rotation axis on which the target is mounted) is smaller than that of the rectangular PCB 1523 of FIG. 15(d), but is more expensive. The accuracy of the angular sensor system using any of the targets shown in FIG. 15(b) to FIG. 15(d), however, is substantially identical, which is better than that of an angular sensor system using a D-shaped target, as shown e.g. in FIG. 2(b).

In preferred embodiments, "the bow portion" has a relatively large radius R3, and spans an angle α of at least 120°, or at least 130°, or at least 140°, as seen from the centre of the printed circuit board 1521. In the example of FIG. 15(b), the angle α is equal to about 134°. It is noted that this angle can be determined without knowing the mounting position of the target.

In preferred embodiments, "the circular portion" has an average radius R2 (as described above), and spans an angle β of at least 180°, or at least 190°, or at least 200°, or at least 210°, as seen from the centre of the printed circuit board 1521. In the example of FIG. 15(b), the angle β is equal to about 226°. It is noted that this angle can be determined without knowing the mounting position of the target.

**FIG. 15(c)** shows a target comprising a PCB 15222 with chamfered corners containing the conductive portion of FIG. 15(a). This PCB 15222 may be somewhat cheaper to produce than the PCB of FIG. 1521, because the corners can be cut or milled via a straight line. This PCB 1522 offers the advantage that the turning radius is smaller than that of FIG. 15(d), but the price is somewhat higher.

**FIG. 15(d)** shows a target comprising a rectangular PCB 1523 with four right corners (90°) containing the conductive portion of FIG. 15(a). This PCB (1523 is easier to produce, and thus cheaper than those of FIG. 15(b) and FIG. 15(c), assuming all other aspects (e.g. number of layers) are the same.

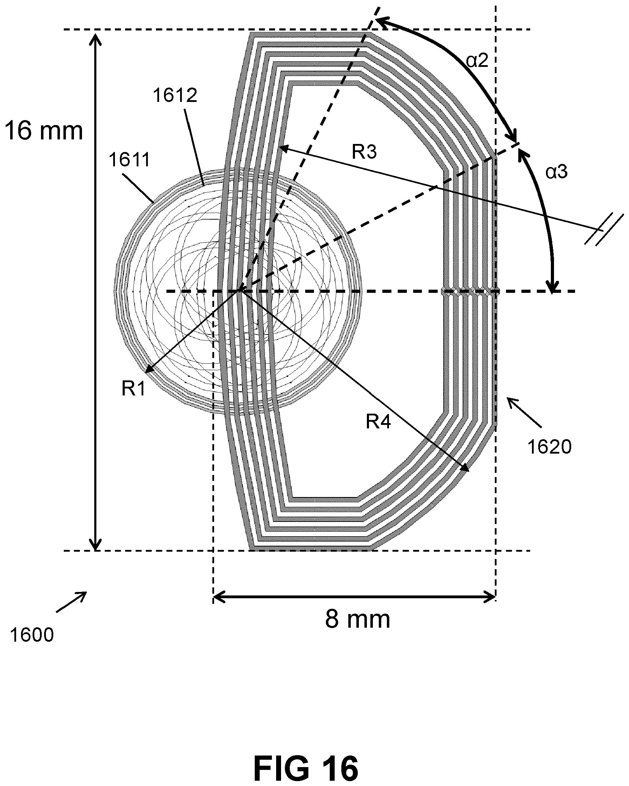

**FIG. 16** shows an inductive sensor arrangement 1600 comprising a target 1620 with an outer periphery defined by an overall rectangular shape with two rounded corners, and wherein the long side of the rectangle is replaced by an arc having a relatively large radius R3 (referred to herein as "a bow"). The sensor system 1600 is a variant of the sensor system 1200 of FIG. 12, where the long straight side (on the left of FIG. 12) is replaced by "a bow". This bow or arc (on the left of FIG. 16) may be a circular arc with a radius R3 of at least 3x8 mm, thus at least 24 mm. In the example of FIG. 16, the turning radius R4 is equal to about 8.9 mm.

This electrical conductor portion of FIG. 16 can be implemented on a printed circuit board, e.g. similar to those shown in FIG. 15(b) to FIG. 15(d).

If the corners of the PCB on which the target 1620 is implemented are not removed (meaning, if the PCB on which this target is implemented has a pure rectangular shape), this target 1620 is cheaper than that of a D-shaped target of FIG. 2(b), because it requires less processing). In addition, as can be appreciated from the above, the accuracy of the sensor system 1600 is improved as compared to that comprising a D-shaped target.

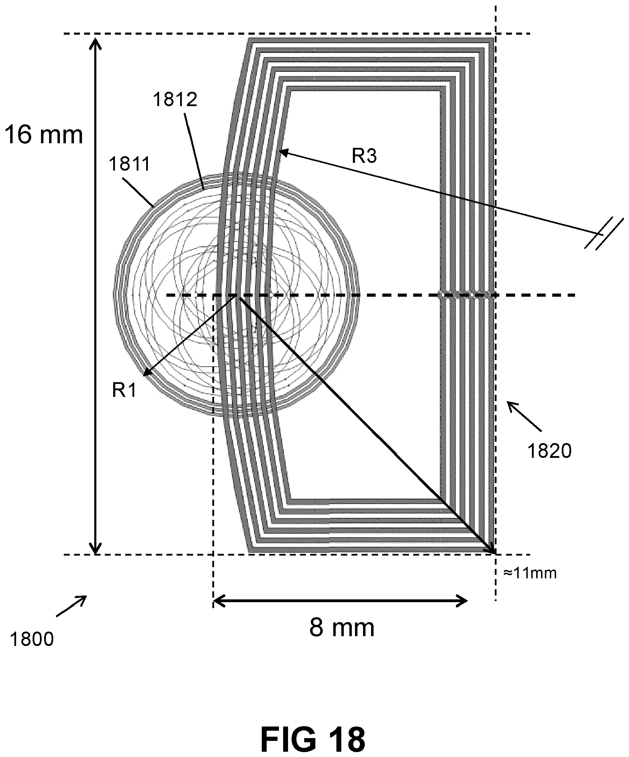

If the corners of this PCB are removed, the turning radius R4 of this target 1620 can be reduced e.g. to a value between about 8.3 mm and about 11.0 mm. The smaller the turning radius R4, the more it will approach the target 1520 shown in FIG. 15. The larger the radius R4, the more it will approach the target 1820 shown in FIG. 18. As a rule of thumb, the larger the turning radius R4, the higher the accuracy.

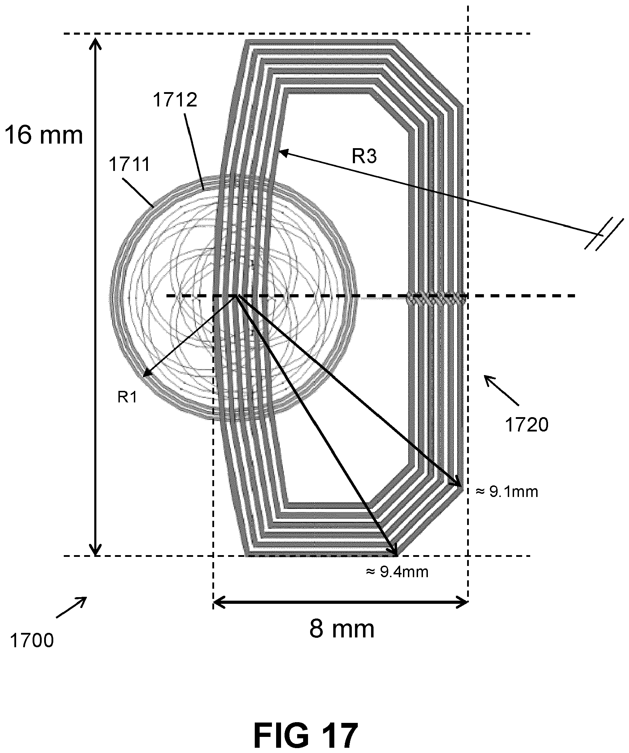

**FIG. 17** shows another inductive sensor arrangement 1700, comprising a target 1720 with an outer periphery defined by an overall rectangular shape with two chamfered corners, and where one long side of the rectangle is replaced by an arc or a bow. This embodiment can be seen as a variant of FIG. 16, where the rounded corners are replaced by chamfered corners. Everything else mentioned above is also applicable here mutatis mutandis. For example, this target can also be implemented on a PCB having a size slightly larger than 16 mm x 8 mm.

For completeness it is noted that the chamfers need not need to be isosceles triangles (i.e. cut at an angle of 45° with respect to the long side), but other triangular cuts will also work.

The same advantages as mentioned above are also applicable here: there is an accuracy improvement with respect to a D-shaped target (implemented on a PCB having the same size). If furthermore the corners of the PCB on which the target is implemented are not removed, there is also an additional cost benefit (similar to the PCB of FIG. 12(d) or the PCB of FIG. 15(d), in addition to the accuracy improvement.

**FIG. 18** shows another inductive sensor arrangement 1800, comprising a target 1820 with an outer periphery defined by an overall rectangular shape, where one long side is replaced by an arc or a bow. The inductive sensor arrangement of FIG. 18 can be regarded as a variant of the sensor arrangement of FIG. 14, where one of the straight edges (above the coils) is replaced by an arc or a bow, or as a variant of FIG. 16 where the rounded edges are extremely small, or as a variant of FIG. 17 where the chamfered edges are extremely small. Everything else mentioned above is also applicable here mutatis mutandis. For example, this target can also be implemented on a PCB having a size slightly larger than 16 mm x 8 mm. The same advantages (e.g. lower cost, higher accuracy) as mentioned above are also applicable here. A disadvantage of this embodiment is that it requires a larger turning radius (approximately 11 mm), which may not be available in all systems. This electrical conductor portion can be implemented on a printed circuit board, e.g. similar to those shown in FIG. 15(b) to FIG. 15(d).

**FIG. 19(a) to FIG. 19(f)** show examples of other embodiments of metal targets, as can be used in embodiments of the present invention. These metal targets are made of an electrically conductive material, e.g. Cu or a Cu-alloy, or Al or an Al-alloy. In preferred embodiments, a largest diameter or largest diagonal or largest chord of these shapes is smaller than 40 mm, or smaller than 30 mm. These metal targets have a shape corresponding to the outer periphery of the conductive portions described above.

In summary,
Referring back to the embodiments shown in FIG. 12 to FIG. 18, it shall be clear that the dimensions of the PCBs of these targets are only illustrative values, provided mainly for comparison reasons, but of course the present invention is not limited thereto, and other dimensions can also be used.

Looking back to Figs 12 to 18 it can be appreciated that the present invention is directed to inductive angular sensor systems having a target with a conductive portion having at least one of the following characteristics:
FIG. 12: overall rectangular shape with two rounded corners
FIG. 13: overall rectangular shape with two chamfered corners
FIG. 14: overall rectangular shape with four right corners (angles of 90°)
FIG. 15: combination of two arcs, one arc substantially semi-circular, one arc having a much smaller curvature (or a much larger radius)
FIG. 16: overall rectangular shape with two rounded corners, and one long side being replaced by an arc with a low curvature (or bow)
FIG. 17: overall rectangular shape with two chamfered corners, and one long side being replaced by an arc with a low curvature (or bow)
FIG. 18: overall rectangular shape, one long side being replaced by an arc with a low curvature (or bow).

Referring to FIG. 12(b) to FIG. 12(d) and FIG. 15(b) to FIG. 15(d) it can be appreciated that the target may be implemented on a printed circuit board, which may be purely rectangular, or may have two rounded or two chamfered corners, or may have a semi-circular shape.

It is noted that the embodiments of FIG. 15 to FIG. 18 all have a "bow" or an arc, e.g. a substantially circular arc with a radius R3 of at least 5 times, and preferably at most 20 times the radius R1 of the transmitter coil.

In variants of the embodiments shown in FIG. 12 to FIG. 18, the target is or comprises a metal plate having a convex shape corresponding to the outer periphery of the tracks shown in any of FIG. 12 to FIG. 18.

The present invention is also directed to a kit of parts comprising a first printed circuit board comprising a transmitter coil and receiver coils, and a corresponding target comprising a second printed circuit board, for example having a shape as illustrated in any of FIG. 12(a) to FIG. 18.

## Claims

1. An inductive angular sensor arrangement (700; 800; 900; 1100; 1200; 1300; 1400; 1500; 1600; 1700; 1800), comprising:
- a substrate (710; 810; 910) comprising at least one transmitter coil (811) and at least two receiver coils (812), the at least one transmitter coil (811) having a substantially circular or annular shape with a first centre (Cs) and a first radius (R1), wherein an orthogonal projection of the at least two receiver coils (812) on the substrate (810) is located completely within an orthogonal projection of the at least one transmitter coil (511), the substrate defining a first axis perpendicular to the substrate and passing through the first centre (Cs);
- a target (720; 820; 920; 1120; 1220; 1320; 1420; 1520; 1620; 1720; 1820), comprising a substantially planar electrical conductive portion rotatably arranged at a predefined distance (Znom) from and substantially parallel to the substrate, wherein the target is rotatable about a second axis which is substantially co-axially aligned with the first axis within mounting tolerances;
**characterised in that**
- the electrically conductive portion of the target has a convex shape with an outer periphery, the outer periphery having an orthogonal projection along the first axis onto the substrate (710; 810; 910), said projection having a portion that is situated outside of the transmitter coil (811);
- and at least one of the following options:
- (i) the electrically conductive portion of the target (720; 820; 920; 1520) has a convex shape with an outer periphery defined by a first curve (821) being a circular arc having a second radius (R2) larger than the first radius (R1), and a second curve (823) having a curvature smaller than that of the first curve (821); or
- (ii) the electrically conductive portion of the target (1120; 1220; 1320; 1720; 1420; 1820) has a convex shape with an outer periphery having an overall rectangular shape, having a width (W2) in the range of 125% to 275% of the first radius (R1) and a length (L2) in the range of 250% to 750% of the first radius (R1), with two rounded corners or with two chamfered corners or with four right corners; or
- (iii) the electrically conductive portion of the target (1620; 1720; 1820) has an overall rectangular shape, having a width (W2) in the range of 125% to 275% of the first radius (R1) and a length (L2) in the range of 250% to 750% of the first radius (R1), wherein one long side of the overall rectangular shape is replaced by a circular arc having a radius (R3) of at least 5 times the first radius (R1); or
- (iv) the electrically conductive portion of the target (1620; 1720; 1820) has an overall rectangular shape, having a width (W2) in the range of 125% to 275% of the first radius (R1) and a length (L2) in the range of 250% to 750% of the first radius (R1), with two rounded corners (1620) or with two chamfered corners (1720) or with two right corners (1820), and wherein one long side of the overall rectangular shape is replaced by a circular arc having a radius (R3) of at least 5 times the first radius (R1).

2. An inductive angular sensor arrangement (700; 800; 900; 1100; 1200; 1300; 1400; 1500; 1600; 1700; 1800) according to claim 1, wherein the first radius (R1) is a value in the range from 3.0 mm to 10.0 mm; and wherein a ratio of the second radius (R2) and the first radius (R1) is a value in the range from 110% to 250%.

3. An inductive angular sensor arrangement (700; 800; 900; 1100; 1200; 1300; 1400; 1500; 1600; 1700; 1800) according to any of the previous claims, wherein each of the at least two receiver coils (812) has a substantially circular shape.

4. An inductive angular sensor arrangement (700; 800; 900; 1100; 1200; 1300; 1400; 1500; 1600; 1700; 1800) according to any of the previous claims, wherein the substrate (710; 810; 910) is a printed circuit board; and wherein the at least one transmitter coil (811) and the at least two receiver coils (812) are formed by conductive tracks on the printed circuit board (810).

5. An inductive angular sensor arrangement (700; 800; 900; 1500; 1600; 1700 ;1800) according to any of the previous claims, wherein the target (720; 820; 920; 1520; 1620; 1720 ;1820) has a symmetry axis (Y) passing through a center (Ct) of the first circular curve (821); and wherein the second curve (823) has a shape that deviates from a straight line oriented in a direction (X) perpendicular to this symmetry axis (Y) by an amount that monotonically increases with distance from the symmetry axis (Y), wherein the amount is chosen so as to substantially compensate an angular error that would occur if the second curve (523) would be a straight line.

6. An inductive angular sensor arrangement (700; 800; 900; 1500; 1600; 1700 ;1800) according to any of the previous claims,
wherein the second curve (823) is a second substantially circular arc having a third radius (R3) larger than the second radius (R2); or
wherein the second curve is a second substantially circular arc having a third radius (R3) in the range of 5 to 20 times the first radius (R1).

7. An inductive angular sensor arrangement (700; 800; 900) according to claim 6, wherein a ratio of the third radius (R3) and the second radius (R2) is a value in the range from 2 to 10.

8. An inductive angular sensor arrangement (700; 800; 900) according to claim 6 or 7, wherein the third radius (R3) is chosen so as to minimize an error between an actual angular position and a calculated angular position derived from the signals provided by the at least two receiver coils, when the target would be located in an actual position which is radially offset (Or) within the first tolerance margin and/or axially offset (Oz) within the second tolerance margin from its predefined position relative to the substrate.

9. An inductive angular sensor arrangement (700; 800; 900; 1100; 1200; 1300; 1400; 1500; 1600; 1700; 1800) according to any of the previous claims, wherein the target (720; 820; 920; 1120; 1220; 1320; 1420; 1520; 1620; 1720; 1820) is a conductive metal plate.

10. An inductive angular sensor arrangement (700; 800; 900; 1100; 1200; 1300; 1400; 1500; 1600; 1700; 1800) according to any of the claims 1 to 8, wherein the target (720; 820; 920; 1120; 1220; 1320; 1420; 1520; 1620; 1720; 1820) comprises a second printed circuit board (1130), and wherein the electrically conductive portion is formed by at least one electrically conductive track on the second printed circuit board.

11. An inductive angular sensor arrangement (700; 800; 900; 1100; 1200; 1300; 1400; 1500; 1600; 1700; 1800) according to any of the previous claims, wherein the target (720; 820; 920; 1120; 1220; 1320; 1420; 1520; 1620; 1720; 1820) further comprises a capacitor, operatively connected to the electrically conducting portion (e.g. to the at least one electrically conductive track) so as to form an LC circuit.

12. An angular position sensor system (940), comprising:
an inductive angular sensor arrangement (700; 800; 900; 1100; 1200; 1300; 1400; 1500; 1600; 1700; 1800) according to any of the previous claims; and
a semiconductor device (941) operatively connected to the at least one transmitter coil (911), and configured for exciting the at least one transmitter coil with an alternating current;
and operatively connected to the at least two receiver coils (912), and configured for receiving signals from the at least two receiver coils;
and further configured for determining an angular position of the target (920) relative to the substrate (910) based on the received signals, or configured for converting the signals received from the at least two receiver coils into quadrature signals.

13. A motor assembly (830) comprising:
- an electrical motor (831) having a rotatable shaft (832) and a housing;
- an inductive angular sensor arrangement (800) according to any of the claims 1 to 11, or an angular position sensor system (940) according to claim 12,
wherein the target (820) is configured for rotating along with the rotatable shaft (832), and
wherein the substrate (810) comprising the at least one transmitter coil (811) and the at least two receiver coils (812) is stationary with respect to the housing.

## Patentansprüche

1. Induktive Winkelsensoranordnung (700; 800; 900; 1100; 1200; 1300; 1400; 1500; 1600; 1700; 1800), umfassend:
- ein Substrat (710; 810; 910), umfassend zumindest eine Senderspule (811) und zumindest zwei Empfängerspulen (812), wobei die zumindest eine Senderspule (811) eine im Wesentlichen kreisförmige oder ringförmige Form mit einem ersten Zentrum (Cs) und einem ersten Radius (R1) aufweist, wobei eine orthogonale Projektion der zumindest zwei Empfängerspulen (812) auf dem Substrat (810) vollständig innerhalb einer orthogonalen Projektion der zumindest einen Senderspule (511) angeordnet ist, wobei das Substrat eine erste Achse senkrecht zu dem Substrat definiert und durch das erste Zentrum (Cs) verläuft;
- ein Ziel (720; 820; 920; 1120; 1220; 1320; 1420; 1520; 1620; 1720; 1820), umfassend einen im Wesentlichen planaren elektrisch leitenden Abschnitt, der drehbar in einem vordefinierten Abstand (Znom) von und im Wesentlichen parallel zu dem Substrat angeordnet ist, wobei das Ziel um eine zweite Achse drehbar ist, die im Wesentlichen koaxial mit der ersten Achse innerhalb von Montagetoleranzen ausgerichtet ist;
**dadurch gekennzeichnet, dass**
- der elektrisch leitende Abschnitt des Ziels eine konvexe Form mit einem Außenumfang aufweist, wobei der Außenumfang eine orthogonale Projektion entlang der ersten Achse auf das Substrat (710; 810; 910) aufweist, wobei die Projektion einen Abschnitt aufweist, der außerhalb der Senderspule (811) liegt;
- und zumindest eine der folgenden Optionen:
- (i) der elektrisch leitende Abschnitt des Ziels (720; 820; 920; 1520) weist eine konvexe Form mit einem Außenumfang, der durch eine erste Kurve (821), die ein Kreisbogen mit einem zweiten Radius (R2) ist, der größer als der erste Radius (R1) ist, definiert ist, und eine zweite Kurve (823) mit einer Krümmung auf, die kleiner als die der ersten Kurve (821) ist; oder
- (ii) der elektrisch leitende Abschnitt des Ziels (1120; 1220; 1320; 1720; 1420; 1820) weist eine konvexe Form mit einem Außenumfang auf, der eine insgesamt rechteckige Form aufweist, mit einer Breite (W2) in dem Bereich von 125 % bis 275 % des ersten Radius (R1) und einer Länge (L2) in dem Bereich von 250 % bis 750 % des ersten Radius (R1), mit zwei abgerundeten Ecken oder mit zwei abgeschrägten Ecken oder mit vier rechten Ecken; oder
- (iii) der elektrisch leitende Abschnitt des Ziels (1620; 1720; 1820) weist eine insgesamt rechteckige Form mit einer Breite (W2) in dem Bereich von 125 % bis 275 % des ersten Radius (R1) und einer Länge (L2) in dem Bereich von 250 % bis 750 % des ersten Radius (R1) auf, wobei eine lange Seite der insgesamt rechteckigen Form durch einen Kreisbogen mit einem Radius (R3) von zumindest dem 5-Fachen des ersten Radius (R1) ersetzt ist; oder
- (iv) der elektrisch leitende Abschnitt des Ziels (1620; 1720; 1820) weist eine insgesamt rechteckige Form auf, mit einer Breite (W2) in dem Bereich von 125 % bis 275 % des ersten Radius (R1) und einer Länge (L2) in dem Bereich von 250 % bis 750 % des ersten Radius (R1), mit zwei abgerundeten Ecken (1620) oder mit zwei abgeschrägten Ecken (1720) oder mit zwei rechten Ecken (1820), und wobei eine lange Seite der insgesamt rechteckigen Form durch einen Kreisbogen mit einem Radius (R3) von zumindest dem 5-Fachen des ersten Radius (R1) ersetzt ist.

2. Induktive Winkelsensoranordnung (700; 800; 900; 1100; 1200; 1300; 1400; 1500; 1600; 1700; 1800) nach Anspruch 1, wobei der erste Radius (R1) ein Wert in dem Bereich von 3,0 mm bis 10,0 mm ist; und wobei ein Verhältnis des zweiten Radius (R2) und des ersten Radius (R1) ein Wert in dem Bereich von 110% bis 250 % ist.

3. Induktive Winkelsensoranordnung (700; 800; 900; 1100; 1200; 1300; 1400; 1500; 1600; 1700; 1800) nach einem der vorhergehenden Ansprüche, wobei jede der zumindest zwei Empfängerspulen (812) eine im Wesentlichen kreisförmige Form aufweist.

4. Induktive Winkelsensoranordnung (700; 800; 900; 1100; 1200; 1300; 1400; 1500; 1600; 1700; 1800) nach einem der vorhergehenden Ansprüche, wobei das Substrat (710; 810; 910) eine Leiterplatte ist; und wobei die zumindest eine Senderspule (811) und die zumindest zwei Empfängerspulen (812) durch Leiterbahnen auf der Leiterplatte (810) gebildet sind.

5. Induktive Winkelsensoranordnung (700; 800; 900; 1500; 1600; 1700; 1800) nach einem der vorhergehenden Ansprüche, wobei das Ziel (720; 820; 920; 1520; 1620; 1720; 1820) eine Symmetrieachse (Y) aufweist, die durch einen Mittelpunkt (Ct) der ersten Kreiskurve (821) verläuft; und wobei die zweite Kurve (823) eine Form hat, die von einer geraden Linie, die in einer Richtung (X) senkrecht zu dieser Symmetrieachse (Y) ausgerichtet ist, um einen Betrag abweicht, der mit dem Abstand von der Symmetrieachse (Y) monoton zunimmt, wobei der Betrag so gewählt ist, dass er einen Winkelfehler, der auftreten würde, wenn die zweite Kurve (523) eine gerade Linie wäre, im Wesentlichen kompensiert.

6. Induktive Winkelsensoranordnung (700; 800; 900; 1500; 1600; 1700; 1800) nach einem der vorhergehenden Ansprüche,
wobei die zweite Kurve (823) ein zweiter, im Wesentlichen kreisförmiger Bogen mit einem dritten Radius (R3) ist, der größer als der zweite Radius (R2) ist; oder
wobei die zweite Kurve ein zweiter, im Wesentlichen kreisförmiger Bogen mit einem dritten Radius (R3) im Bereich des 5- bis 20-Fachen des ersten Radius (R1) ist.

7. Induktive Winkelsensoranordnung (700; 800; 900) nach Anspruch 6, wobei das Verhältnis zwischen dem dritten Radius (R3) und dem zweiten Radius (R2) ein Wert in dem Bereich von 2 bis 10 ist.

8. Induktive Winkelsensoranordnung (700; 800; 900) nach Anspruch 6 oder 7,
wobei der dritte Radius (R3) so gewählt wird, dass ein Fehler zwischen einer tatsächlichen Winkelposition und einer berechneten Winkelposition, die aus den von den zumindest zwei Empfängerspulen bereitgestellten Signalen abgeleitet wird, minimiert wird, wenn sich das Ziel in einer tatsächlichen Position befinden würde, die innerhalb des ersten Toleranzbereichs radial versetzt (Or) und/oder innerhalb des zweiten Toleranzbereichs axial versetzt (Oz) von seiner vordefinierten Position in Bezug auf das Substrat ist.

9. Induktive Winkelsensoranordnung (700; 800; 900; 1100; 1200; 1300; 1400; 1500; 1600; 1700; 1800) nach einem der vorhergehenden Ansprüche, wobei das Ziel (720; 820; 920; 1120; 1220; 1320; 1420; 1520; 1620; 1720; 1820) eine leitende Metallplatte ist.

10. Induktive Winkelsensoranordnung (700; 800; 900; 1100; 1200; 1300; 1400; 1500; 1600; 1700; 1800) nach einem der Ansprüche 1 bis 8, wobei das Ziel (720; 820; 920; 1120; 1220; 1320; 1420; 1520; 1620; 1720; 1820) eine zweite Leiterplatte (1130) umfasst, und wobei der elektrisch leitende Abschnitt durch zumindest eine elektrisch leitende Spur auf der zweiten Leiterplatte gebildet ist.

11. Induktive Winkelsensoranordnung (700; 800; 900; 1100; 1200; 1300; 1400; 1500; 1600; 1700; 1800) nach einem der vorhergehenden Ansprüche, wobei das Ziel (720; 820; 920; 1120; 1220; 1320; 1420; 1520; 1620; 1720; 1820) ferner einen Kondensator umfasst, der mit dem elektrisch leitenden Abschnitt (z. B. mit der zumindest einen elektrisch leitenden Spur) in Wirkverbindung steht, um eine LC-Schaltung zu bilden.

12. Winkelpositionssensorsystem (940), umfassend:
eine induktive Winkelsensoranordnung (700; 800; 900; 1100; 1200; 1300; 1400; 1500; 1600; 1700; 1800) nach einem der vorhergehenden Ansprüche; und
eine Halbleitervorrichtung (941), die mit der zumindest einen Senderspule (911) wirkverbunden und zum Anregen der zumindest einen Senderspule mit einem Wechselstrom konfiguriert ist;
und mit den zumindest zwei Empfängerspulen (912) wirkverbunden und für den Empfang von Signalen von den zumindest zwei Empfängerspulen konfiguriert ist;
und ferner zum Ermitteln einer Winkelposition des Ziels (920) in Bezug auf das Substrat (910) basierend auf den empfangenen Signalen oder zum Umwandeln der von den zumindest zwei Empfängerspulen empfangenen Signale in Quadratursignale konfiguriert ist.

13. Motorbaugruppe (830), umfassend:
- einen Elektromotor (831) mit einer drehbaren Welle (832) und einem Gehäuse;
- eine induktive Winkelsensoranordnung (800) nach einem der Ansprüche 1 bis 11 oder ein Winkelpositionssensorsystem (940) nach Anspruch 12,
wobei das Ziel (820) zum Drehen zusammen mit der drehbaren Welle (832) konfiguriert ist, und
wobei das Substrat (810), das die zumindest eine Senderspule (811) und die zumindest zwei Empfängerspulen (812) umfasst, in Bezug auf das Gehäuse stationär ist.

## Revendications

1. Agencement de capteur angulaire inductif (700 ; 800 ; 900 ; 1100 ; 1200 ; 1300 ; 1400 ; 1500 ; 1600; 1700; 1800), comprenant :
- un substrat (710; 810; 910) comprenant au moins une bobine émettrice (811) et au moins deux bobines réceptrices (812), l'au moins une bobine émettrice (811) ayant une forme sensiblement circulaire ou annulaire avec un premier centre (Cs) et un premier rayon (R1), dans lequel une saillie orthogonale des au moins deux bobines réceptrices (812) sur le substrat (810) est située complètement au sein d'une saillie orthogonale de l'au moins une bobine émettrice (511), le substrat définissant un premier axe perpendiculaire au substrat et passant par le premier centre (Cs) ;
- une cible (720 ; 820 ; 920 ; 1120 ; 1220 ; 1320 ; 1420 ; 1520 ; 1620 ; 1720 ; 1820), comprenant une portion conductrice électrique sensiblement plane agencée rotative à une distance (Znom) prédéfinie du substrat et sensiblement parallèle au substrat, dans lequel la cible est rotative autour d'un deuxième axe qui est sensiblement aligné coaxialement avec le premier axe dans des tolérances de montage ;
**caractérisé en ce que**
- la portion électroconductrice de la cible a une forme convexe avec une périphérie externe, la périphérie externe ayant une saillie orthogonale le long du premier axe sur le substrat (710 ; 810 ; 910), ladite saillie ayant une portion qui est située à l'extérieur de la bobine émettrice (811) ;
- et au moins l'une des options suivantes :
- (i) la portion électroconductrice de la cible (720; 820; 920; 1520) a une forme convexe avec une périphérie externe définie par une première courbe (821) qui est un arc circulaire ayant un deuxième rayon (R2) plus grand que le premier rayon (R1), et une deuxième courbe (823) ayant une courbure plus petite que celle de la première courbe (821) ; ou
- (ii) la portion électroconductrice de la cible (1120 ; 1220 ; 1320 ; 1720 ; 1420 ; 1820) a une forme convexe avec une périphérie externe ayant une forme rectangulaire globale, ayant une largeur (W2) dans la plage de 125 % à 275 % du premier rayon (R1) et une longueur (L2) dans la plage de 250 % à 750 % du premier rayon (R1), avec deux coins arrondis ou avec deux coins chanfreinés ou avec quatre coins droits ; ou
- (iii) la portion électroconductrice de la cible (1620; 1720; 1820) a une forme rectangulaire globale, ayant une largeur (W2) dans la plage de 125 % à 275 % du premier rayon (R1) et une longueur (L2) dans la plage de 250 % à 750 % du premier rayon (R1), dans lequel un côté long de la forme rectangulaire globale est remplacé par un arc circulaire ayant un rayon (R3) d'au moins 5 fois le premier rayon (R1) ; ou
- (iv) la portion électroconductrice de la cible (1620; 1720; 1820) a une forme rectangulaire globale, ayant une largeur (W2) dans la plage de 125 % à 275 % du premier rayon (R1) et une longueur (L2) dans la plage de 250 % à 750 % du premier rayon (R1), avec deux coins arrondis (1620) ou avec deux coins chanfreinés (1720) ou avec deux coins droits (1820), et dans lequel un côté long de la forme rectangulaire globale est remplacé par un arc circulaire ayant un rayon (R3) d'au moins 5 fois le premier rayon (R1).

2. Agencement de capteur angulaire inductif (700 ; 800 ; 900 ; 1100 ; 1200 ; 1300 ; 1400 ; 1500 ; 1600; 1700; 1800) selon la revendication 1, dans lequel le premier rayon (R1) est une valeur dans la plage de 3,0 mm à 10,0 mm ; et dans lequel un rapport du deuxième rayon (R2) et du premier rayon (R1) est une valeur dans la plage de 110 % à 250 %.

3. Agencement de capteur angulaire inductif (700 ; 800 ; 900 ; 1100 ; 1200 ; 1300 ; 1400 ; 1500 ; 1600 ; 1700 ; 1800) selon l'une quelconque des revendications précédentes, dans lequel chacune des au moins deux bobines réceptrices (812) a une forme sensiblement circulaire.

4. Agencement de capteur angulaire inductif (700 ; 800 ; 900 ; 1100 ; 1200 ; 1300 ; 1400 ; 1500 ; 1600; 1700; 1800) selon l'une quelconque des revendications précédentes, dans lequel le substrat (710 ; 810 ; 910) est une carte de circuit imprimé ; et dans lequel l'au moins une bobine émettrice (811) et les au moins deux bobines réceptrices (812) sont formées par des pistes conductrices sur la carte de circuit imprimé (810).

5. Agencement de capteur angulaire inductif (700; 800; 900; 1500; 1600; 1700 ;1800) selon l'une quelconque des revendications précédentes, dans lequel la cible (720; 820; 920; 1520; 1620; 1720 ;1820) a un axe de symétrie (Y) passant par un centre (Ct) de la première courbe circulaire (821) ; et dans lequel la deuxième courbe (823) a une forme qui s'écarte d'une ligne droite orientée dans une direction (X) perpendiculaire à cet axe de symétrie (Y) d'une quantité qui augmente de manière monotone avec la distance à l'axe de symétrie (Y), dans lequel la quantité est choisie de manière à compenser sensiblement une erreur angulaire qui se produirait si la deuxième courbe (523) était une ligne droite.

6. Agencement de capteur angulaire inductif (700; 800; 900; 1500; 1600; 1700; 1800) selon l'une quelconque des revendications précédentes,
dans lequel la deuxième courbe (823) est un deuxième arc sensiblement circulaire ayant un troisième rayon (R3) plus grand que le deuxième rayon (R2) ; ou
dans lequel la deuxième courbe est un deuxième arc sensiblement circulaire ayant un troisième rayon (R3) dans la plage de 5 à 20 fois le premier rayon (R1).

7. Agencement de capteur angulaire inductif (700; 800 ; 900) selon la revendication 6, dans lequel un rapport du troisième rayon (R3) et du deuxième rayon (R2) est une valeur dans la plage de 2 à 10.

8. Agencement de capteur angulaire inductif (700 ; 800 ; 900) selon la revendication 6 ou 7,
dans lequel le troisième rayon (R3) est choisi de manière à réduire au minimum une erreur entre une position angulaire réelle et une position angulaire calculée dérivée des signaux fournis par les au moins deux bobines réceptrices, lorsque la cible serait située dans une position réelle qui est décalée radialement (Or) au sein de la première marge de tolérance et/ou décalée axialement (Oz) au sein de la deuxième marge de tolérance de sa position prédéfinie par rapport au substrat.

9. Agencement de capteur angulaire inductif (700 ; 800 ; 900 ; 1100 ; 1200 ; 1300 ; 1400 ; 1500 ; 1600; 1700; 1800) selon l'une quelconque des revendications précédentes, dans lequel la cible (720; 820 ; 920 ; 1120 ; 1220 ; 1320 ; 1420 ; 1520 ; 1620 ; 1720 ; 1820) est une plaque métallique conductrice.

10. Agencement de capteur angulaire inductif (700 ; 800 ; 900 ; 1100 ; 1200 ; 1300 ; 1400 ; 1500 ; 1600; 1700; 1800) selon l'une quelconque des revendications 1 à 8, dans lequel la cible (720; 820; 920; 1120; 1220; 1320; 1420; 1520; 1620; 1720; 1820) comprend une deuxième carte de circuit imprimé (1130), et dans lequel la portion électroconductrice est formée par au moins une piste électroconductrice sur la deuxième carte de circuit imprimé.

11. Agencement de capteur angulaire inductif (700 ; 800 ; 900 ; 1100 ; 1200 ; 1300 ; 1400 ; 1500 ; 1600; 1700; 1800) selon l'une quelconque des revendications précédentes, dans lequel la cible (720; 820 ; 920 ; 1120 ; 1220 ; 1320 ; 1420 ; 1520 ; 1620 ; 1720 ; 1820) comprend en outre un condensateur, relié fonctionnellement à la portion électroconductrice (par exemple à l'au moins une piste électroconductrice) de manière à former au moins un circuit LC.

12. Système de capteur de position angulaire (940), comprenant :
un agencement de capteur angulaire inductif (700 ; 800 ; 900 ; 1100 ; 1200 ; 1300 ; 1400 ; 1500 ; 1600; 1700; 1800) selon l'une quelconque des revendications précédentes; et
un dispositif à semi-conducteur (941) relié fonctionnellement à l'au moins une bobine émettrice (911), et configuré pour exciter l'au moins une bobine émettrice avec un courant alternatif ;
et relié fonctionnellement aux au moins deux bobines réceptrices (912), et configuré pour recevoir des signaux à partir des au moins deux bobines réceptrices ;
et configuré en outre pour déterminer une position angulaire de la cible (920) par rapport au substrat (910) sur la base des signaux reçus, ou configuré pour convertir les signaux reçus à partir des au moins deux bobines réceptrices en signaux en quadrature.

13. Ensemble moteur (830) comprenant :
- un moteur électrique (831) ayant un arbre rotatif (832) et un logement ;
- un agencement de capteur angulaire inductif (800) selon l'une quelconque des revendications 1 à 11, ou un système de capteur de position angulaire (940) selon la revendication 12,
dans lequel la cible (820) est configurée pour tourner avec l'arbre rotatif (832), et
dans lequel le substrat (810) comprenant l'au moins une bobine émettrice (811) et les au moins deux bobines réceptrices (812) est stationnaire par rapport au logement.
